# EUROPÄISCHE PATENTSCHRIFT

(11) **EP 1 542 778 B1**
(45) Veröffentlichungstag und Bekanntmachung des Hinweises auf die Patenterteilung: **09.11.2011**
(21) Anmeldenummer: 03798149.5
(22) Anmeldetag: 08.09.2003
(51) Int. Cl.: B01D 3/20, B01D 3/18

(54) **HYDRAULISCH ABGEDICHTETER QUERSTROM-STOFFAUSTAUSCHBODEN**
HYDRAULICALLY-SEALED CROSS-CURRENT MATERIAL EXCHANGE TRAY
PLATEAU DE TRANSFERT DE MATIERE A COURANT TRANSVERSAL POURVU D'UN SYSTEME D'ETANCHEITE HYDRAULIQUE

(30) Priorität: 19.09.2002 DE 10243625
(43) Veröffentlichungstag der Anmeldung: 22.06.2005
(73) Patentinhaber: BASF SE, 67056 Ludwigshafen (DE)
(72) Erfinder: THIEL, Joachim, 67435 Neustadt (DE); HAMMON, Ulrich, 68163 Mannheim (DE); GERBER, Bernd, 67069 Ludwigshafen (DE); JANSEN, Helmut, 41542 Dormagen (DE); KAIBEL, Björn, 40723 Hilden (DE)
(86) Internationale Anmeldenummer: PCT/EP2003/009942
(87) Internationale Veröffentlichungsnummer: WO 2004/028657

(56) Entgegenhaltungen:
- DE-B- 1 091 533
- DE-B- 1 096 870
- FR-A- 779 167
- GB-A- 721 247
- US-A- 2 753 166

## Beschreibung

### Beschreibung

Vorliegende Erfindung betrifft einen hydraulisch abgedichteten Querstrom-Stoffaustauschboden, der als Einbaute in Trennkolonnen für Stoffaustausch zwischen Flüssigkeiten und Gasen geeignet ist, mit die Flüssigkeit führenden, zueinander im Abstand parallel angeordneten Rinnen und zwischen den Rinnen angeordneten Gasdurchtri.ttsöffnungen, die von länglichen Hauben überdeckt sind, deren beide untere Längsränder in die Flüssigkeit der Rinnen eintauschen und Gasaustrittsschlitze mit'Leitflächen aufweisen, die den Gasaustritt in die Flüssigkeit in eine schräge Richtung leiten, um die Richtung der Flüssigkeitsströme in den Rinnen zu erzeugen, wobei die längere Seite der Hauben senkrecht zur Querstromrichtung der Flüssigkeit ausgerichtet ist. Zu dieser Gruppe von Stoffaustauschböden gehören z.B. die aus der Fachliteratur bekannten Thormann^{®}-Böden.

Ferner betrifft vorliegende Erfindung Trennkolonnen, die wenigstens einen solchen Stoffaustauschboden enthalten sowie die Verwendung solcher Trennkolonnen für thermische Trennverfahren.

Als Ergebnis chemischer Reaktionen werden in der Regel keine reinen Stoffe sondern Stoffgemische erhalten, aus denen die Zielkomponenten abgetrennt werden müssen.

Dazu werden häufig Trennverfahren angewendet, die in Trennkolonnen durchgeführt werden. In diesen Trennkolonnen werden gasförmige und flüssige Stoffströme im Gleich- oder im Gegenstrom geführt und infolge des zwischen den Stoffströmen bestehenden Ungleichgewichts findet ein Wärme- und Stoffaustausch statt, der letztlich die in der Trennkolonne gewünschte Auftrennung bedingt. In dieser Schrift sollen solche Trennverfahren als thermische Trennverfahren bezeichnet werden.

Beispiele für thermische Trennverfahren bilden die fraktionierende Kondensation (vgl. DE-A 19924532) und/oder die Rektifikation (aufsteigende Dampfphase wird im Gegenstrom zu absteigender Flüssigphase geführt; die Trennwirkung beruht darauf, dass die Dampfzusammensetzung im Gleichgewicht anders als die Flüssigzusammensetzung ist), die Absorption (ein Gas und eine Flüssigkeit werden im Gleich- oder im Gegenstrom geführt; die Trennwirkung beruht auf der unterschiedlichen Löslichkeit der Gasbestandteile in der Flüssigkeit), die Strippung (wie die Absorption; die Flüssigphase ist jedoch mit einer Komponente beladen, die vom Strippgas aufgenommen wird) und die Desorption (der Umkehrprozess zur Absorption; das in der Flüssigphase gelöste Gas wird durch Partialdruckerniedrigung abgetrennt).

In der Regel enthalten vorgenannte Trennkolonnen Einbauten, die den Zweck verfolgen, die Oberfläche für den die Auftrennung in der Trennkolonne bewirkenden Wärme- und Stoffaustausch zu erhöhen.

Als solche Einbauten kommen z.B. Packungen, Füllkörper und/oder Stoffaustauschböden in betracht.

Stoffaustauschböden verfolgen den Zweck, in der Trennkolonne in Form von Flüssigkeitsschichten Orte mit geschlossenen flüssigen Phasen zur Verfügung zu stellen. Die Oberfläche des in der Flüssigkeitsschicht z.B. aufsteigenden und sich dabei in der geschlossenen flüssigen Phase verteilenden Dampf- bzw. Gasstromes ist dann die maßgebende Austauschfläche.

Besonders häufig werden als Stoffaustauschböden solche mit Flüssigkeitszwangsführung verwendet.

Die Flüssigkeitszwangsführung wird dabei dadurch erzielt, dass die Stoffaustauschböden wenigstens einen Ablaufschacht aufweisen (Ablauf), durch den die Flüssigkeit unabhängig vom Strömungsweg des Dampfes in einer Bodenkolonne vom höher gelegenen Boden auf den tiefer gelegenen Boden fließt (Zulauf). Die horizontale Flüssigkeitsströmung über den Austauschboden vom Zulauf zum Ablauf wird entsprechend der verfahrenstechnischen Aufgabenstellung gewählt. Das Gas bzw. der Dampf tritt durch die offenen Querschnitte der Bodenplatte.

Wird die Flüssigkeit im Umkehrstrom über den Boden geführt (Zulauf und Ablauf des Stoffaustauschbodens sind auf der gleichen Seite des Bodens angeordnet), spricht man von Umkehrstromböden. Bei Radialstromböden strömt die Flüssigkeit auf dem Boden radial von der Mitte (Zulauf) zum Ablauf am Rand des Bodens.

Bei den Querstromböden wird die Flüssigkeit, über den gesamten Fließbereich betrachtet, quer über den Boden vom Zulauf zum Ablauf geführt. In der Regel sind Querstromböden einflutig gestaltet. D.h., Zulauf und Ablauf sind auf gegenüberliegenden Seiten des Bodens angeordnet. Sie können aber auch zweiflutig (oder auch mehr als zweiflutig) gestaltet sein. In diesem Fall kann der Zulauf z.B. in der Mitte und je ein Ablauf auf gegenüberliegenden Seiten des Stoffaustauschbodens angeordnet sein.

Hydraulisch abgedichtete Querstromböden sind dadurch charakterisiert, dass sie beim Abschalten der Kolonne nicht leerlaufen können, sieht man von der winzigen Leerlaufbohrung (ihr Querschnitt ist normalerweise mehr als 200 mal kleiner als der Gesamtquerschnitt der Durchtrittsstellen) ab, die jeder Querstromboden aus Zweckmäßigkeitsgründen aufweist.

D.h., auch bei geringen Kolonnenbelastungen weisen hydraulisch abgedichtete Querstromböden gestaute Flüssigkeit (Rücklauf- und/ oder Zulaufflüssigkeit) auf und laufen keine Gefahr, trocken zu laufen. Dies ist dadurch bedingt, dass es sich bei den Durchtrittsstellen von hydraulisch abgedichteten Querstromböden nicht wie z.B. bei Dual-Flow-Böden, Siebböden und Ventilböden um kaminlose Bohrungen handelt. Vielmehr mündet jede Durchtrittsstelle in einen Kamin, der ein Trockenlaufen unterbindet. Über dem Kamin sind Dampfumlenkhauben (Glocken) angebracht, die in die gestaute Bodenflüssigkeit eintauchen. Häufig sind die Dampfumlenkhauben an ihren Rändern geschlitzt oder gezackt (d.h., sie weisen Treibschlitze auf). Der durch die Durchtrittsstelle aufsteigende Dampfstrom erfährt durch die Dampfumlenkhauben eine Ablenkung und strömt parallel zum Boden, d.h., quer zur Kolonne, in die gestaute Flüssigkeit.

Die aus benachbarten, in der Regel über den Boden äquidistant verteilt angeordneten, Hauben austretenden Dampfblasen bilden in der gestauten Flüssigkeit eine Sprudelschicht aus.

Ablaufrohre bzw. -segmente, die, in der Regel abwechselnd links oder rechts, die Böden verlassen, regeln - von Wehren unterstützt - den Flüssigkeitsstand der Stoffaustauschböden und führen die Flüssigkeit dem darunterliegenden Boden zu. Für die hydraulisch abgedichtende Wirkung ist wesentlich, dass die Ablaufrohre bzw. -segmente des oberen Bodens in die gestaute Flüssigkeit des darunter liegenden Bodens tauchen. Vorzugsweise sind keine Zulaufwehre vorhanden. In der Höhe einstellbare Glocken gestatten ein Anpassen an die Strömungsverhältnisse und den Ausgleich der Eintauchtiefen bei Herstellungsungleichmäßigkeiten, so dass alle Glocken des Bodens gleichmäßig gasen.

Je nach Gestalt und Anordnung der Glocken unterscheidet man z.B. die einflutig gestalteten hydraulisch abgedichteten Querstromböden in Rundglockenböden (Durchtrittsstelle, Kamin und Glocke sind rund), Tunnel-Böden (Durchtrittsstelle, Kamin und Glocke sind rechteckig, die Glocken sind hintereinander angeordnet, wobei die längere Rechteckkante parallel zur Querstromrichtung der Flüssigkeit ausgerichtet ist) und Thormann-Boden (Durchtrittsstelle, Kamin und Glocke sind rechteckig, die Glocken sind hintereinander angeordnet, wobei die längere Rechteckkante senkrecht zur Querstromrichtung der Flüssigkeit ausgerichtet ist).

Thormann-Böden sind z.B. in der DE-A 19924532, in der Broschüre "Montz, Ihr Partner in der Verfahrenstechnik", der Julius Montz GmbH, Apparate für die chemische Industrie, D-40705 Hilden, 2002, Seiten 58 und 59, und in Technische Fortschrittsberichte, Band 61, Grundlagen der Dimensionierung von Kolonnenböden, Verlag Theodor Steinkopf, Dresden, 1967, Seiten 66 bis 73 beschrieben.

Zwischen zwei in Querstromrichtung hintereinander angeordneten Hauben eines Thormanns-Boden befindet sich jeweils eine Rinne, in der die Flüssigkeit fließt. Charakteristisch für Thormann Böden ist nun, dass die Flüssigkeit in zwei in Querstromrichtung jeweils aufeinanderfolgenden Rinnen im Gegenstrom fließt. Diese Zwangsströmung wird durch den Dampf bewirkt, der aus entsprechend aufgebogenen, sägezahnartigen Schlitzen mit Leitflächen austritt.

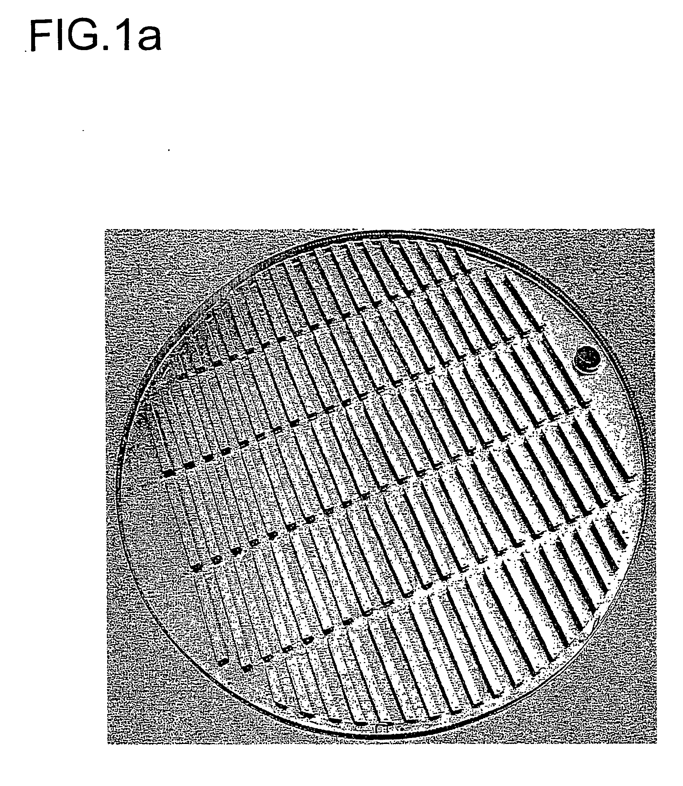

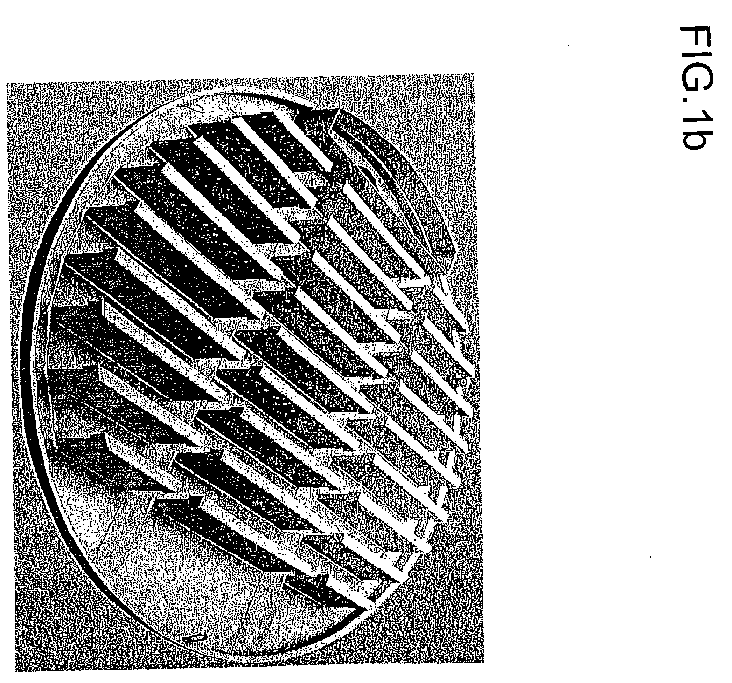

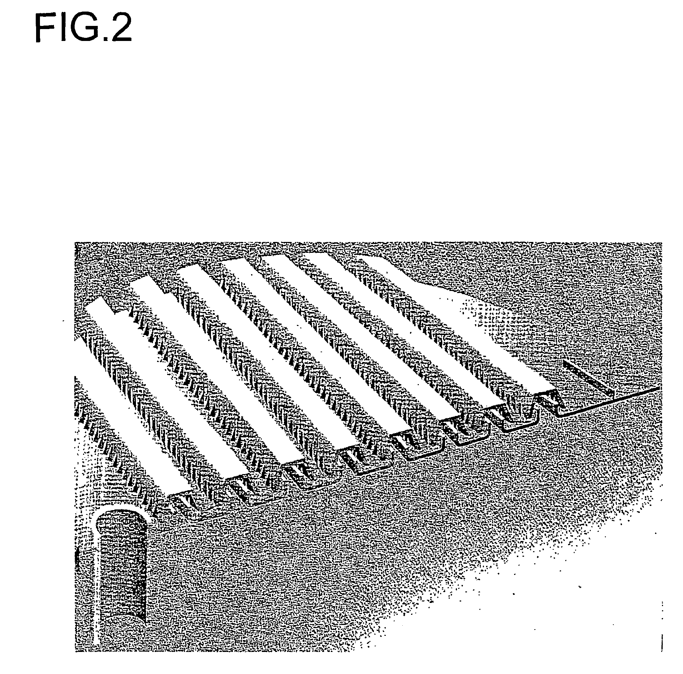

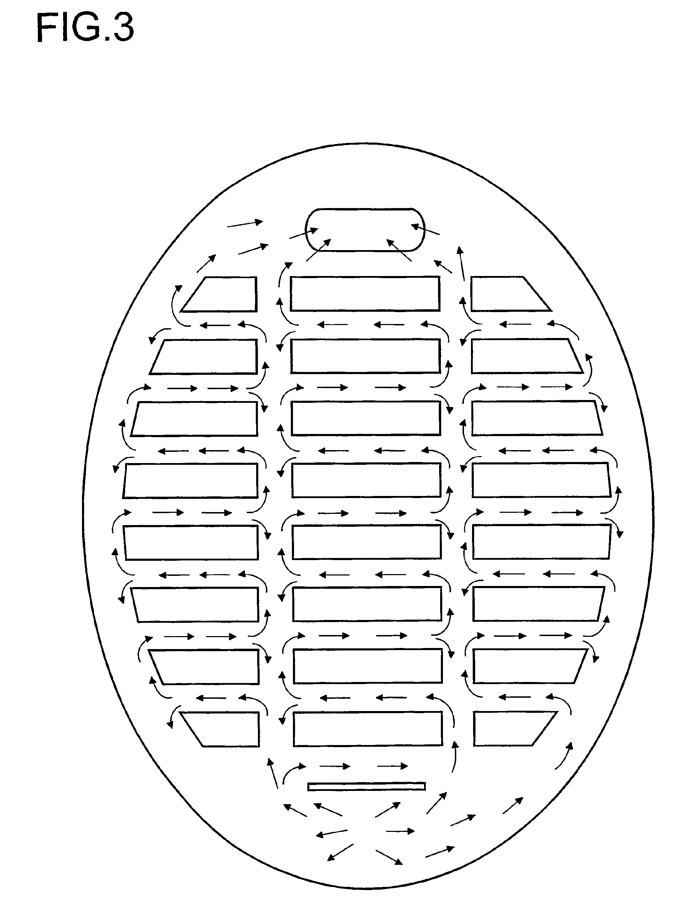

Die Draufsicht auf einen Thormann-Boden zeigen die Fig. 1a und 1b. Fig. 2 zeigt einen Querschnitt durch Thormann-Hauben und Dampfkamine. Die Fig. 3 zeigt die gerichtete Flüssigkeitsströmung auf einem Thormann-Boden, die durch die Anordnung der Hauben im Verein mit den speziellen Dampfschlitzen bewirkt wird.

Die Anwendung von Thormann-Böden ist insbesondere bei großen Dampfbelastungen zweckmäßig. Der geringe Druckverlust begünstigt den Einsatz von Thormann-Böden im Vakuum. Günstig an Thormann-Böden ist ferner, dass sie auch bei vergleichsweise geringen Flüssigkeitsbelastungen noch stabil betrieben werden können. Nachteilig an Thormann-Böden ist jedoch, dass ihr Wirkungsgrad und die Stabilität ihres Betriebes, insbesondere bei hohen Flüssigkeitsbelastungen, nicht in vollem Umfang zu befriedigen vermag. Hohe Flüssigkeitsbelastungen treten insbesondere in solchen Trennkolonnen auf, die für große Kapazitäten ausgelegt sind. Dies sind in der Regel Trennkolonnen mit großen Durchmessern. Große Durchmesser sind hier insbesondere Durchmesser von ≥ 4 m, z.B. 4 m bis 8 m oder bis 10 m.

Die Aufgabe der vorliegenden Erfindung bestand daher darin, Querstrom-Stoffaustauschböden zur Verfügung zu stellen, die einerseits die Vorteile von Thormann-Böden aufweisen, andererseits jedoch die vorgenannten Nachteile nur noch in vermindertem Umfang oder überhaupt nicht mehr aufweisen.

Insbesondere sollen die verbesserten Querstrom-Stoffaustauschböden dazu geeignet sein, die für das Trennproblem der DE-A 19924532 in der vorgenannten Schrift empfohlenen hydraulisch abgedichteten Querstromböden mit erhöhtem Wirkungsgrad zu ersetzen. Vorgenanntes Anforderungsprofil soll vor allem im Bezug auf das Ausführungsbeispiel der DE-A 19924532 erfüllt werden.

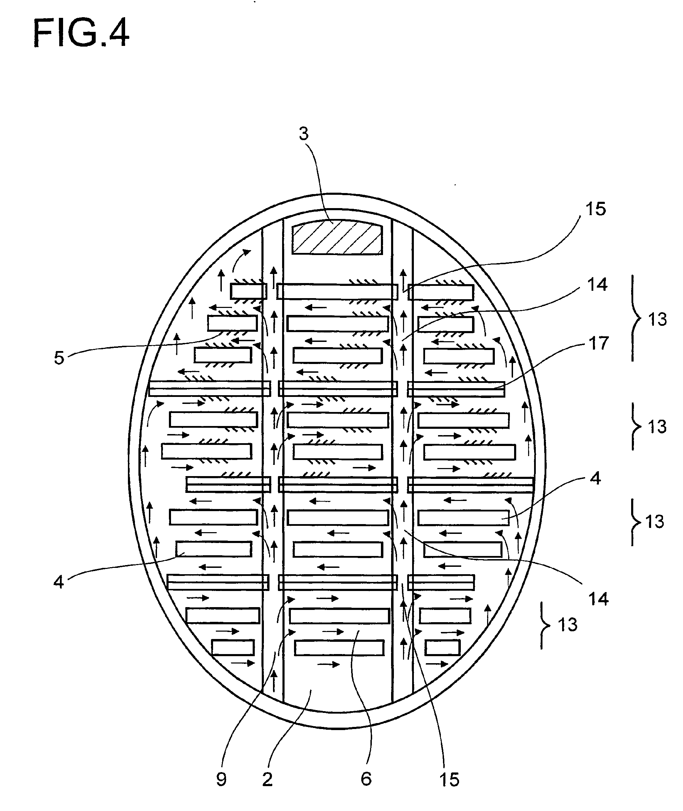

Demgemäß wurde ein hydraulisch abgedichteter Querstrom-Stoffaustauschboden (1), der als Einbaute in Trennkolonnen für Stoffaustausch zwischen Flüssigkeiten und Gasen geeignet ist, mit die Flüssigkeit führenden, zueinander im Abstand parallel angeordneten Rinnen (6) und zwischen den Rinnen angeordneten Gasdurchtrittsöffnungen (7), die von länglichen Hauben (4) überdeckt sind, deren beide untere Längsränder (4a) in die Flüssigkeit der Rinnen (6) eintauchen und Gasaustrittsschlitze (5) mit Leitflächen (5a) aufweisen, die den Gasaustritt in die Flüssigkeit in eine schräge Richtung leiten, um die Richtung der Flüssigkeitsströme in den Rinnen zu erzeugen, wobei die längere Seite der Haube senkrecht zur Querstromrichtung der Flüssigkeit ausgerichtet ist,- gefunden, der dadurch gekennzeichnet ist, dass jeweils in wenigstens zwei, in Querstromrichtung aufeinanderfolgenden, Rinnen (6) die Leitflächen (5a) der Hauben (4) so gerichtet sind, dass die Flüssigkeit in diesen Rinnen in dieselbe Richtung fließt (die nummerischen Adressen beziehen sich auf die Figuren 4 bis 11), und die Flüssigkeit im übrigen über die Gesamtheit der Rinnen mäanderförmig geführt wird.

Eine in Querstromrichtung vorliegende Abfolge von Rinnen mit gleicher Strömungsrichtung der Flüssigkeit, die durch keine Rinne mit entgegengesetzter Strömungsrichtung unterbrochen ist, soll in dieser Schrift als Bodenbereich (13) bezeichnet werden.

Erfindungsgemäß umfaßt ein Bodenbereich in notwendiger Weise wenigstens zwei Rinnen. In der Regel wird ein Bodenbereich nicht mehr als sechs Rinnen umfassen. Häufig umfaßt ein Bodenbereich auch drei oder vier, manchmal fünf Rinnen.

Erfindungsgemäß von Vorteil ist ferner, wenn auf der Oberseite wenigstens einiger Hauben des erfindungsgemäßen hydraulisch abgedichteten Querstrom Stoffaustauschbodens Leitbleche (17) befestigt sind, die die Haube überragen. Dabei ist von Vorteil, wenn die Leitelemente (Leitbleche) zumindest auf denjenigen Hauben angebracht sind, die Bodenbereiche entgegengesetzter Flüssigkeitsströmung voneinander trennen. In der Regel bildet die Fläche der Leitelemente mit der Haubendecke einen rechten Winkel.

In der Regel werden bei dem erfindungsgemäßen hydraulisch abgedichteten Querstrom-Stoffaustauschboden die Rinnen durch zu den Rinnen senkrecht stehende Querkanäle (9) unterbrochen. Erfindungsgemäß vorteilhaft ist es, wenn die Querkanäle dort Verengungen aufweisen, wo zwei Bodenbereiche mit entgegengesetzter Strömungsrichtung aneinandergrenzen. Im Extremfall kann die Verengung zu einem Verschluss verwachsen sein.

Im einfachsten Fall können diese Einengungen durch stirnseitig zueinander enger angeordnete Gasdurchtrittsöffnungen und/oder Hauben gebildet sein. Im vorgenannten Extremfall wären dann bei dieser Variante zwei Gasdurchtrittsöffnungen und Hauben stirnseitig zu einer einzigen (längeren) Gasdurchtrittsöffnung und Haube verwachsen.

Die Breite B zwischen den unteren Längsrändern einer Haube wird an die ins Auge gefasste Gasbelastung angepasst.

In der Regel beträgt B 2 cm bis 20 cm oder bis 30 cm, häufig 4 cm bis 8 cm.

Die Längsseiten der Gasdurchtrittsöffnungen und/oder Hauben betragen in der Regel 5 cm bis 200 cm, häufig 10 cm bis 100 cm.

Ein verbesserter Flüssigkeitszulauf zu dahinterliegenden Rinnen wird erreicht, wenn die Oberseite der Hauben an wenigstens einem Haubenende zum Ende hin eine Abflachung aufweist.

Durch Einstellung des Winkels α (> 0 und ≤ 90°) zwischen Leitfläche und Längsseite der Haube kann zu hohen Gasgeschwindigkeiten und, daraus resultierend, zu hohen Flüssigkeitsströmungen entgegengewirkt werden. Je kleiner dieser Winkel (d.h., je größer die Anstellung der Gasaustrittsschlitze) desto größer die Flüssigkeitsströmung.

Einige spezielle Ausführungsformen der Erfindung sind in den Figuren 4 bis 12 dargestellt und werden im folgenden näher beschrieben.
- Figur 4: zeigt in Draufsicht die gerichtete Flüssigkeitsströmung auf einem erfindungsgemäßen Querstrom-Stoffaustauschboden.

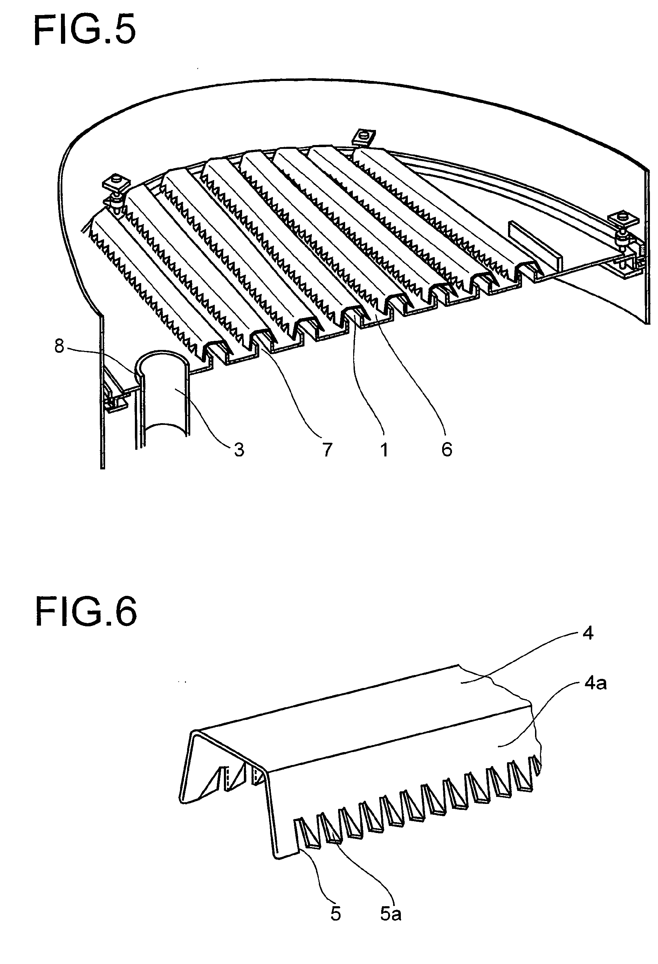

- Figur 5: zeigt eine perspektivische Ansicht eines Teils eines erfindungsgemäßen Stoffaustauschbodens.
- Figur 6: zeigt eine perspektivische Ansicht einer Haube eines erfindungsgemäßen Stoffaustauschbodens.

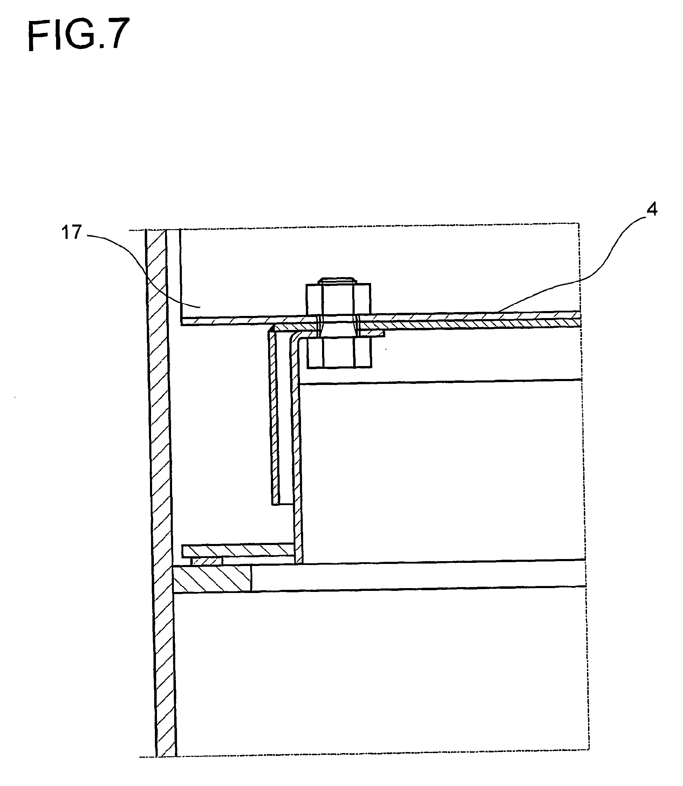

- Figur 7: zeigt einen senkrechten Längschnitt durch eine Haube mit Leitelement und den Boden.

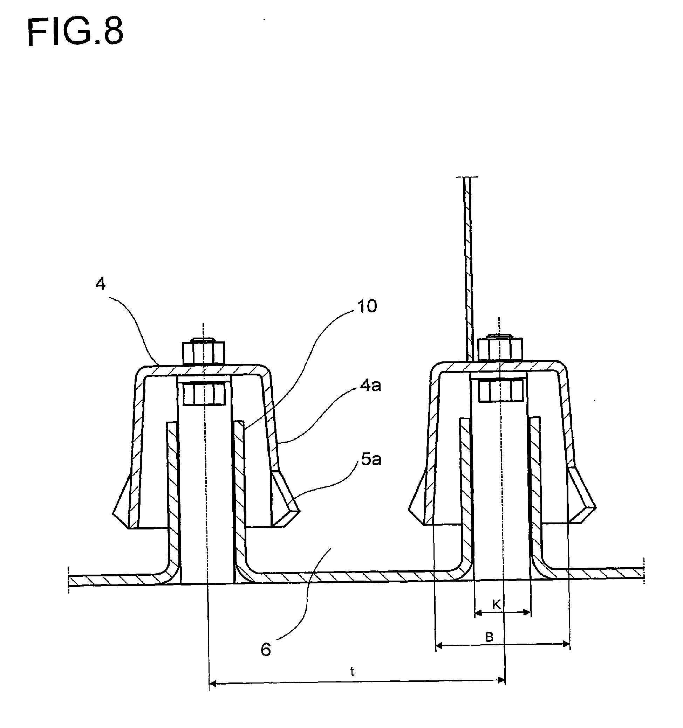

- Figur 8: zeigt einen senkrechten Querschnitt durch eine Haube und den Boden.

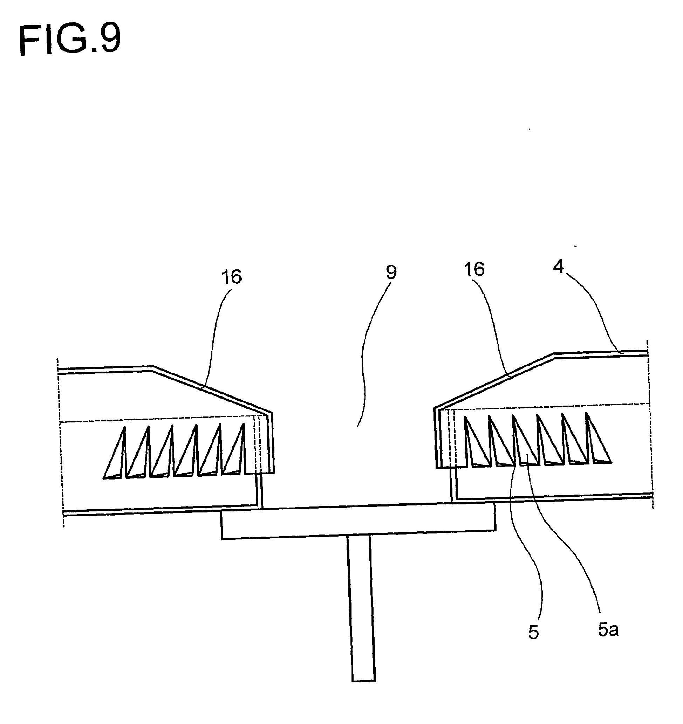

- Figur 9: zeigt einen senkrechten Längsschnitt im Bereich zweier Haubenenden mit Abflachung, die zwischen sich einen Flüssigkeitsdurchtritt bilden.

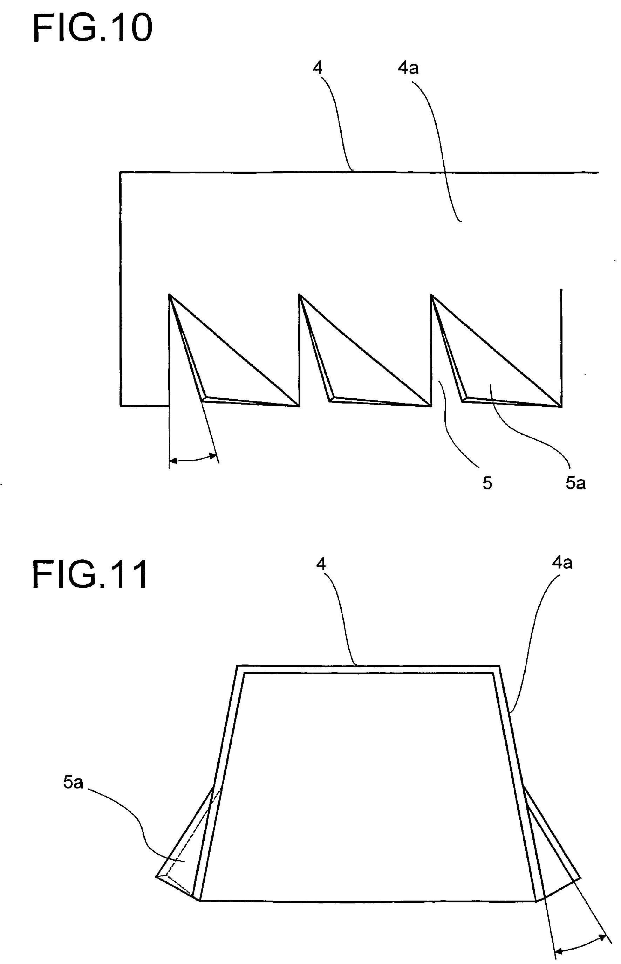

- Figur 10: zeigt eine Seitenansicht der im Anstellwinkel an die Aufgabenstellung anpassbaren Leitflächen einer Haube.
- Figur 11: zeigt einen Querschnitt durch eine Haube mit im Anstellwinkel an die Aufgabenstellung anpassbaren Leitflächen einer Haube.

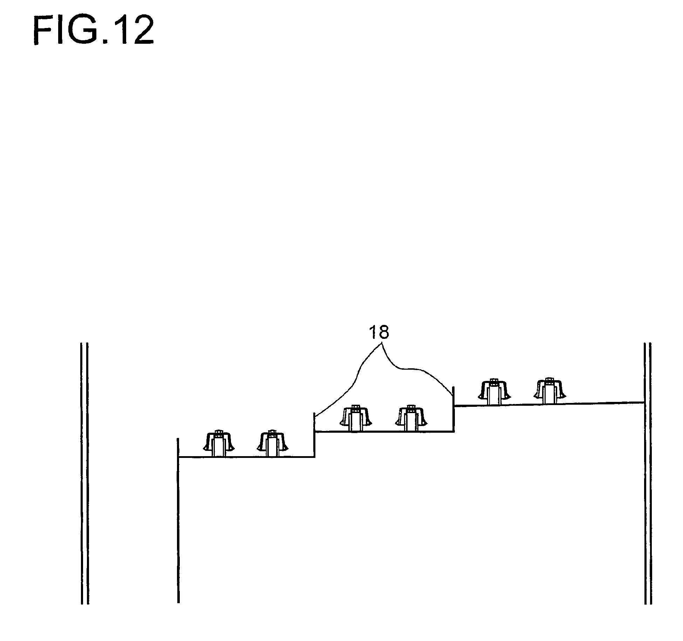

- Figur 12: zeigt eine kaskadenförmige Ausführung des erfindungsgemäßen Stoffaustauschbodens.

Der in den Figuren 4 bis 8 dargestellte Boden 1 weist ein Bodenblech auf, das eine Vielzahl paralleler, länglicher, schlitzförmiger Gasdurchtrittsöffnungen 7 als Dampfkamine aufweist. Die Dampfkamine sind mit ihrer Längskante senkrecht zur Verbindungslinie von Zulauffläche 2 zum Ablaufschacht 3 angeordnet und bilden mit ihren Seitenwänden 10 Rinnen 6, durch die die Flüssigkeit geleitet wird. über die Dampfkamine sind Hauben 4 gesetzt, die besonders geformte Gasaustrittsschlitze 5 in ihren Seitenwänden 4a aufweisen, die in die Rinne 6 und damit in die Flüssigkeit hineinragen.

Ein Rand jedes Gasaustrittsschlitzes 5 bildet eine schräge Leitfläche 5a, durch die das Gas gerichtet in die Flüssigkeit geblasen wird, um eine gerichtete Strömung der Flüssigkeit in der Rinne 6 zu erzeugen. Die Leitflächen 5a sind in ihrer Winkeleinstellung an die Aufgabenstellung anpassbar. Für hohe Gasgeschwindigkeiten wird der Winkel α vergrößert und damit die Flüssigkeitsströmung in den Rinnen 6 verringert. Zusätzlich kann eine Anpassung über die Anzahl der Schlitze vorgenommen werden. Durch die von den geschlitzten Hauben gebildeten Strömungskanäle 6 wird Flüssigkeit von der Zulauffläche 2 zum Ablaufschacht 3 geführt. Die Überlaufkante 8 am Ablaufschacht und die Dampfkaminhöhe sorgen für einen bis oberhalb des Schlitzes 5 reichenden Flüssigkeitsstand auf dem Boden. Die Gase oder Dämpfe steigen von unten her durch die Dampfkamine 7 in die Haube 4 und treten durch die Schlitze 5 in die Flüssigkeit, wobei auf diese ein Strömungsimpuls übertragen wird.

Mehrere in Querstromrichtung hintereinander liegende Haubenlinien 4 besitzen erfindungsgemäß dieselbe Strömungsrichtung. Durch solche Gleichrichtung der Leitflächen 5a an den Gasaustrittsschlitzen 5 in mehreren hintereinander liegenden Haubenlinien und das Verändern der Abstände 9 zwischen in einer Linie befindlichen Hauben 4 kann die Flüssigkeitsführung des erfindungsgemäßen Stoffaustauschbodens in idealer Weise auf große Kolonnendurchmesser angepasst werden. Zusätzlich kann die untere Haubenbreite B bei hoher Gaslast vergrößert werden.

Durch das Anbringen von senkrechten, meist flachen, Leitelementen 17 auf den Hauben 4 wird eine Überströmen der Hauben mit Flüssigkeit gemindert. Im übrigen wird der erhöhte Wirkungsgrad des erfindungsgemäßen Stoffaustauschbodens darauf zurückgeführt, dass er folgende Eigenschaften aufweist:
- enge Verweilzeitverteilung;
- minimale Rückvermischung;
- gute Annäherung an eine kolbenförmige Strömung.

Bei bei extremen Gasbelastungen auftretenden hohen Gasgeschwindigkeiten in den Schlitzen 5 kann bei Bedarf durch Veränderung der Geometrie der Haube und durch den Einsatz von Deentrainerelementen über den Hauben (z.B. das Anbringen von Packungen oder Füllkörperschüttungen zwischen den Böden) entgegengetreten werden.

Um in den Durchtrittsbereichen 9 zwischen den Kopfenden zweier Hauben 4 den Flüssigkeitszulauf zu den dahinter liegenden Rinnen zu verbessern, können die Oberseiten der Hauben 4 an ihren Enden bzw. Kopfseiten in Form schräger, zu den Enden hin abfallenden Abflachungen 16, abgeflacht sein. In einer Ausführungsform des erfindungsgemäßen Stoffaustauschbodens befinden sich die Gasdurchtrittsöffnungen in Querstromrichtung nicht in einer Ebene, sondern sind in treppenförmig aufeinander folgende Ebenen gelegt (Kaskadenausführung gemäß Fig. 12), wobei sich am Übergang von einer Ebene in die darauffolgende Ebene zweckmäßig ein Überlaufwehr (18) und sich die höchstgelegene Ebene beim Zulauf sowie die tiefstgelegene Ebene beim Ablauf befindet.

Als Werkstoffe für die erfindungsgemäßen hydraulisch abgedichteten Querstrom-Stoffaustauschböden kommen Edelstähle (z.B. 1.4301, 1.4541, 1.4401, 1.4404, 1.4571, 1.4000, 1.4435, 1.4539 u.a.), Hasteloy C4, Aluminium, Kupfer, Titan, Monel und Kunststoffe wie z.B. KERA, Diabon, PVC u.a. in Betracht.

Die erfindungsgemäßen Querstrom-Stoffaustauschböden eignen sich insbesondere für Gasbelastungsfaktoren (= Gasleerrohrgeschwindigkeit ● (Wurzel aus der Gasdichte)) im Bereich von 0,1 (Pa) ^{0,5} bis 3 (Pa) ^{0,5} und für Flüssigkeitsbelastungen im Bereich von 0,001 bis 10 m³/(m²·h). Sie können sowohl unter Normaldruck, unter reduziertem Druck und unter Überdruck betrieben werden.

Selbstverständlich können erfindungsgemäße Querstrom-Stoffaustauschböden in einer Trennkolonne als einzige Einbauten zur Anwendung kommen. Sie können jedoch auch in Kombination mit anderen Bodentypen (z.B. Dual-Flow-Böden und/oder Ventilböden) und/oder in Kombination mit von Böden verschiedenen Einbauten (z.B. Pakkungen und/oder Füllkörpern) innerhalb einer Trennkolonne zur Anwendung kommen. Erfindungsgemäße Querstrom-Stoffaustauschböden enthaltende Trennkolonnen eignen sich für thermische Trennverfahren jedweder Art.

Unter Dual-Flow-Böden sollen in dieser Schrift Siebböden ohne Ablaufsegement verstanden werden. Dabei handelt es sich um Platten mit einfachen Durchtrittsstellen (Löcher, Schlitze etc.), die vielfach auch als Regensiebböden bezeichnet werden.

Durch die Abwesenheit von Ablaufsegmenten (Ablaufschächten) treten das aufsteigende Gas und die in der Trennkolonne absteigende Rücklaufflüssigkeit entgegengesetzt strömend durch die gleichen Durchtrittsstellen des Bodens.

Der Querschnitt der Durchtrittsstellen wird in an sich bekannter Weise der Belastung der Kolonne angepasst. Ist er zu klein, strömt das aufsteigende Gas mit so hoher Geschwindigkeit durch die Durchtrittsstellen, dass die in der Kolonne absteigende Flüssigkeit im wesentlichen ohne Trennwirkung mitgerissen wird. Ist der Querschnitt der Durchtrittsstellen zu groß, bewegen sich aufsteigendes Gas und absteigende Flüssigkeit im wesentlichen ohne Austausch aneinander vorbei und der Boden läuft Gefahr, trocken zu laufen. D.h., der Arbeitsbereich für Dual-Flow-Böden ist durch 2 Grenzpunkte festgelegt. Eine minimale Grenzgeschwindigkeit muß vorhanden sein, damit auf dem Boden eine gewisse Flüssigkeitsschicht gehalten wird, um ein Arbeiten des Bodens zu ermöglichen.

Die obere Grenze ist durch den Flutpunkt festgelegt, wenn die Geschwindigkeit zum Stau der Flüssigkeit auf den Regensiebböden führt und ein Durchregnen verhindert wird. Im normalen Arbeitsbereich regnet die in der Trennkolonne absteigende Flüssigkeit in Tropfen von Dual-Flow-Böden zu Dual-Flow-Boden, d.h., zwischen den Regensiebböden wird die geschlossene Gasphase von einer zerteilten Flüssigkeitsphase durchsetzt. Die auf dem Regensiebboden auftretenden Tropfen werden teilweise versprüht.

In der Regel schließt jeder Dual-Flow-Boden, ebenso wie jeder erfindungsgemäße Stoffaustauschboden, bündig mit den Kolonnenwänden ab. Es gibt aber auch Ausführungsvarianten, bei denen zwischen Kolonnenwand und Boden ein Zwischenraum besteht, der nur teilweise durch Brücken unterbrochen ist. Neben den eigentlichen Durchtrittsöffnungen weisen Dual-Flow-Böden in der Regel noch Öffnungen auf, die z.B. eine Befestigung des Bodens auf Auflageringen oder ähnlichem ermöglichen (vgl. z.B. DE-A 10159823).

Für die Zwecke dieser Schrift verwendbare Dual-Flow-Böden sind z.B. in Technische Fortschrittsberichte, Bd. 61, Grundlagen der Dimensionierung von Kolonnenböden, Seite 196 bis 211, Verlage Theodor Steinkopf, Dresden (1967) und in der DE-A 10230219 beschrieben.

Unter Ventilböden sollen in dieser Schrift Querstromböden verstanden werden, die Bodenbohrungen mit hubbegrenzten Teller-, Ballast- oder Hebeventilen (Schwimmklappe) aufweisen, die die Größe der Dampfdurchtrittsöffnung der jeweiligen Kolonnenbelastung anpassen. Der aufsteigende Gasstrom wird abgelenkt, strömt parallel zum Boden in die gestaute Rücklaufflüssigkeit und bildet eine Sprudelschicht aus..Bewehrte Ablaufrohre führen den Rücklauf von Boden zu Boden. Häufig sind sie zweiflutig gestaltet. Sie können aber auch drei- und mehrflutig (z.B. bis zu achtflutig) gestaltet sein. In der Regel ist es zweckmäßig die Flutigkeit mit dem Kolonnendurchmesser zu erhöhen.

Die erfindungsgemäßen Querstrom-Stoffaustauschböden eignen sich insbesondere zur Durchführung eines Verfahrens der fraktionierenden Kondensation eines Acrylsäure enthaltenden Produktgasgemisches einer heterogen katalysierten Gasphasen-Partialoxidation von C₃-Vorläufern der Acrylsäure mit molekularem Sauerstoff in einer Trennkolonne gemäß der DE-A 19924532, die von unten nach oben zunächst Dual-Flow-Böden und im Anschluss daran erfindungsgemäße Querstrom-Stoffaustauschböden enthält.

Unter dem Begriff "C₃-Vorläufer" von Acrylsäure werden dabei solche chemischen Verbindungen zusammengefaßt, die formal durch Reduktion von Acrylsäure erhältlich sind. Bekannte C₃-Vorläufer von Acrylsäure sind z.B. Propan, Propen und Acrolein. Aber auch Verbindungen wie Propionaldehyd oder Propionsäure sind zu den C₃-Vorläufern zu zählen. Von ihnen ausgehend handelt es sich bei der heterogen katalysierten Gasphasen-Partialoxidation mit molekularem Sauerstoff wenigstens teilweise um eine oxidative Dehydrierung.

Bei den relevanten heterogen katalysierten Gasphasen-Partialoxidationen werden die genannten C₃-Vorläufer der Acrylsäure, in der Regel mit inerten Gasen wie z.B. Stickstoff, CO, CO₂, inerten Kohlenwasserstoffen und/oder Wasserdampf verdünnt, im Gemisch mit molekularem Sauerstoff bei erhöhten Temperaturen sowie gegebenenfalls erhöhtem Druck über übergangsmetallische Mischoxidkatalysatoren geleitet und oxidativ in ein Acrylsäure enthaltendes Produktgasgemisch umgewandelt.

In typischer Weise ist das Acrylsäure enthaltende Produktgasgemisch einer heterogen katalysierten Gasphasen-Partialoxidation von C₃-Vorläufern der Acrylsäure mit molekularem Sauerstoff an im festen Aggregatzustand befindlichen Katalysatoren wie folgt zusammengesetzt:

| | | | |
|---|---|---|---|
| 1 | bis 30 | Gew.-% | Acrylsäure, |
| 0,05 | bis 10 | Gew.-% | molekularer Sauerstoff, |
| 1 | bis 30 | Gew.-% | Wasser, |
| 0 | bis 5 | Gew.-% | Essigsäure, |
| 0 | bis 3 | Gew.-% | Propionsäure, |
| 0 | bis 1 | Gew.-% | Maleinsäure und/oder |
| | | | Maleinsäure-Anhydrid, |
| 0 | bis 2 | Gew.-% | Acrolein, |
| 0 | bis 1 | Gew.-% | Formaldehyd, |
| 0 | bis 1 | Gew.-% | Furfural, |
| 0 | bis 0,5 | Gew.-% | Benzaldehyd |
| 0 | bis 1 | Gew.-% | Propen, und als Restmenge |
| inerte Gase wie z.B. Stickstoff, Kohlenmonoxid, | | | |
| Kohlendioxid, Methan oder Propan. | | | |

Die Gasphasenoxidation selbst kann wie im Stand der Technik beschrieben durchgeführt werden. Ausgehend von Propen kann die Gasphasenoxidation z.B. in zwei aufeinanderfolgenden Oxidationsstufen durchgeführt werden, wie sie in der EP-A 700714 und in der EP-A 700893 beschrieben sind. Selbstverständlich können aber auch die in der DE-A 19740253 sowie in der DE-A 19740252 zitierten Gasphasenoxidationen zur Anwendung kommen.

In der Regel beträgt die Temperatur des die Gasphasenoxidation verlassenden Produktgasgemisches 150 bis 350°C, häufig 200 bis 300°C.

In einem Quenchsystem wird das heiße Produktgasgemisch zweckmäßigerweise zunächst durch direkte Kühlung auf eine Temperatur von 100 bis 180°C abgekühlt, bevor es gemeinsam mit der verwendeten Quenchflüssigkeit zum Zweck der fraktionierenden Kondensation in den untersten Abschnitt (den Sumpf) der die erfindungsgemäßen Querstrom-Stoffaustauschböden enthaltenden erfindungsgemäßen Trennkolonne geführt wird. Der in der Kolonne herrschende Betriebsdruck beträgt in der Regel 0,5 bis 5 bar, häufig 0,5 bis 3 bar und vielfach 0,5 bis 2 bar.

Als Quenchvorrichtung können alle im Stand der Technik für diesen Zweck bekannten Vorrichtungen (z.B. Sprühwäscher, Venturiwäscher, Blasensäulen oder sonstige Apparate mit berieselten Oberflächen) eingesetzt werden, wobei vorzugsweise Venturi-Wäscher oder Sprühkühler verwendet werden. Bevorzugt wird eine Gleichstromvorrichtung (z.B. eine Prallplattendüse) verwendet. Zur indirekten Kühlung oder Erwärmung der Quenchflüssigkeit wird diese, insbesondere beim Anfahren, über einen Wärmeüberträger bzw. Wärmetauscher geführt. Diesbezüglich eignen sich alle gängigen Wärmeüberträger oder Wärmetauscher. Als bevorzugt seien Rohrbündelwärmetauscher, Plattenwärmetauscher und Luftkühler genannt. Geeignete Kühlmedien sind Luft beim entsprechenden Luftkühler und Kühlflüssigkeiten, insbesondere Wasser, bei den anderen Kühlvorrichtungen.

Als Quenchflüssigkeit kann z.B. Sumpfflüssigkeit aus der erfindungsgemäßen fraktionierenden Kondensation oder ein Gemisch aus Sumpfflüssigkeit und bei Rückspaltung einer Teilmenge der Sumpfflüssigkeit anfallendem, mit Polymerisationsinhibitor versetztem, Kondensat verwendet werden. D.h., bei Bedarf können bezüglich einer Teilmenge der der erfindungsgemäßen Trennkolonne kontinuierlich entnommenen Sumpfflüssigkeit die in dieser Teilmenge enthaltenen, durch Michael-Addition in reversibler Weise gebildeten, Acrylsäureoligomere durch Einwirkung erhöhter Temperaturen (130 bis 250°C) und gegebenenfalls unter Zugabe saurer bzw. basischer Spaltkatalysatoren bei reduziertem Druck (z.B. 100 mbar oder 200 mbar bis 500 mbar) in Acrylsäure rückgespalten werden. Die dabei dampfförmig entweichende Acrylsäure wird in zweckmäßigerweise kondensiert, dabei mit Polymerisationsinhibitor versetzt (z.B. Phenothiazin in rein abgetrennter Acrylsäure gelöst) und mit der übrigen entnommenen Sumpfflüssigkeit vereinigt als Quenchflüssigkeit verwendet. Die Temperatur der Quenchflüssigkeit liegt nach Verlassen des oben genannten Wärmetauschers in der Regel bei 100 bis 150°C. Die Einleitstelle für das Gemisch aus gequenchtem Produktgasgemisch der katalytischen Gasphasenoxidation und verwendeter Quenchflüssigkeit in die erfindungsgemäße Trennkolonne befindet sich im Sumpfraum dieser Kolonne, der zweckmäßigerweise einen Zentrifugaltropfenabscheider integriert enthält und durch einen ersten Kaminboden von untersten Dual-Flow-Böden getrennt ist.

Der Kaminboden fungiert gleichzeitig als Sammelboden, von dem kontinuierlich Kondensat entnommen und in den Sumpfraum und/oder in den Quenchraum geführt wird. Oberhalb des ersten Kaminbodens ist eine erste Serie von in der Regel äquidistanten Dual-Flow-Böden in der Trennkolonne untergebracht, die von einem zweiten Kaminboden (Fangboden) abgeschlossen wird. Von diesem zweiten Fangboden wird im Seitenabzug als Mittelsiederfraktion rohe Acrylsäure kontinuierlich entnommen, die im Normalfall eine Reinheit von ≥ 95 Gew.-% aufweist. Zweckmäßigerweise wird man diese rohe Acrylsäure weiteren destillativen und/oder kristallisativen Weiterreinigungsstufen zuführen und wenigstens einen Teil der im Rahmen dieser Destillation (Rektifikationen) und/oder Kristallisationen anfallenden Sumpfflüssigkeiten und/oder Mutterlaugen unterhalb des zweiten, aber oberhalb des ersten Fangbodens in die erfindungsgemäße Trennkolonne rückführen.

Erfindungsgemäß zweckmäßig wird man die als Mittelsiederfraktion entnommene rohe Acrylsäure zum Zweck der Weiterreinigung einer Kristallisation zuführen. Das zu verwendende Kristallisationsverfahren unterliegt keiner Beschränkung. Die Kristallisation kann kontinuierlich oder diskontinuierlich, einstufig oder mehrstufig bis zu beliebigen Reinheitsgraden durchgeführt werden. Bei Bedarf kann der kristallisativ zu reinigenden rohen Acrylsäure vorab der Kristallisation Wasser zugesetzt werden (in der Regel enthält diese dann, bezogen auf die enthaltene Menge an Acrylsäure, bis zu 10 Gew.-%, meist bis zu 5 Gew.-% an Wasser).

Es überrascht, dass eine veresterungsgerechte Acrylsäure (Reinheit ≥ 98 Gew.-%) bereits durch eine einzige Kristallisationsstufe erzielt werden kann. Zweckmäßigerweise wird diese Kristallisationsstufe als Suspensionskristallisation ausgeführt, wie es in Spalte 10 der DE-A 19924532 beschrieben ist. Die bei der Suspensionskristallisation entstehenden Acrylsäure-Kristalle haben eine würfel- bis quaderförmige Erscheinungsform. Das Länge (L) zu Dicke (D) Verhältnis liegt dabei üblicherweise im Bereich von L:D = 1:1 bis L:D = 6:1, bevorzugt im Bereich 1:1 bis 4:1, und besonders bevorzugt im Bereich 1,5:1 bis 3,5:1. Die Dicke D der Kristalle liegt üblicherweise im Bereich von 20 bis 600 µm, oft bei 50 bis 300 µm. Die Länge L der Kristalle liegt üblicherweise im Bereich von 50 bis 1500 µm, oft bei 200 bis 800 µm. Trennt man das' Suspensionskristallisat von der verbliebenen Mutterlauge mittels einer Schmelz-Waschkolonne (z.B. einer solchen gemäß der DE-A 10223058), kann mittels einer einzigen Kristallisationsstufe sogar superabsorbergerechte Acrylsäure (Reinheit ≥ 99,7 Gew.-%), d.h., Acrylsäure, die sich zur Herstellung von Wasser superabsorbierenden Polyacrylaten eignet, erzielt werden. In diesem Fall führt man in zweckmäßiger Weise die Gesamtmenge der abgetrennten Mutterlauge in die erfindungsgemäße Trennkolonne zurück.

Die Kristallisation kann aber auch als fraktionierte Fallfilmkristallisation durchgeführt werden, wie sie die EP-A 616998 empfiehlt. Diese kann z.B. zwei Reinigungsstufen umfassen (diesbezüglich geeignete Fallfilmkristallisatoren können z.B. 1000 bis 1400 Kristallisationsrohre einer Länge von 10 bis 15 m und eines Außendurchmessers von 50 bis 100 mm enthalten). Die in der zweiten Reinigungsstufe abgetrennte Mutterlauge wird zweckmäßig in die erste Reinigungsstufe rückgeführt. Die in der ersten Reinigungsstufe abgetrennte Mutterlauge wird vorteilhaft vollständig in die erfindungsgemäße Trennkolonne rückgeführt. Das Reinprodukt der ersten Reinigungsstufe kann vollständig oder nur teilweise der zweiten Reinigungsstufe zugeführt werden. Erfolgt nur eine Teilzuführung wird man die verbleibende Restmenge in der Regel mit dem Reinprodukt der zweiten Reinigungsstufe zum dann verbrauchsgerechten Endprodukt abmischen.

Erfindungsgemäß zweckmäßig wird man eine Teilmenge der dem zweiten Fangboden entnommenen rohen Acrylsäure dem unterhalb dieses Fangbodens befindlichen Dual-Flow-Boden zuführen. Diesem Boden wird man in der Regel auch Mutterlauge zuführen. Vorab der Zufuhr wird man die Mutterlauge in der Regel auf eine Temperatur erwärmen, die in etwa der Entnahmetemperatur der rohen Acrylsäure entspricht.

Oberhalb des zweiten Fangbodens schließt sich zunächst eine zweite Serie von, zweckmäßigerweise äquidistanten, Dual-Flow-Böden an, die dann von den erfindungsgemäßen Querstrom-Stoffaustauschböden, die zweckmäßigerweise gleichfalls äquidistant angeordnet sind, abgelöst werden. Der oberste Dual-Flow-Boden ist häufig als Verteilerboden ausgerüstet. D.h., er weist z.B. Überlaufrinnen mit gezacktem Überlauf auf.

Die erfindungsgemäßen Querstrom-Stoffaustauschböden werden mit einem dritten Kaminboden (Fangboden) abgeschlossen.

Oberhalb des dritten Fangbodens befinden sich, vorzugsweise zweiflutige, Ventilböden. Das Prinzip von Ventilböden sowie erfindungsgemäß verwendbare Ventilböden finden sich z.B. in Technische Fortschrittsberichte, Band 61, Grundlagen der Dimensionierung von Kolonnenböden, S. 96 bis 138. Sie sind im wesentlichen dadurch charakterisiert, dass sie dem durchströmenden Dampf über einen weiten Belastungsbereich eine der jeweiligen Belastung entsprechende Durchstromöffnung zur Verfügung stellen. Erfindungsgemäß bevorzugt werden Ballastböden verwendet. D.h., in den Öffnungen des Bodens befinden sich Käfige mit durch Gewichte verschlossenen Öffnungen. Erfindungsgemäß besonders bevorzugt sind VV12-Ventile der Fa. Stahl, DE, Viernheim. Im Ventilbodenraum kondensiert im wesentlichen Wasser sowie schwerer als Wasser flüchtige Bestandteile. Das dabei gewonnene Kondensat wird als Sauerwasser bezeichnet.

Vom dritten Fangboden wird kontinuierlich Sauerwasser entnommen. Ein Teil des entnommenen Wassers wird auf den obersten der erfindungsgemäßen Querstrom-Stoffaustauschböden in die Kolonne rückgeführt. Ein anderer Teil des entnommenen Sauerwassers wird durch indirekten Wärmetausch abgekühlt und, in zweckmäßiger Weise gesplittet, ebenfalls in die erfindungsgemäße Trennkolonne rückgeführt. Eine Teilmenge wird dabei auf den obersten Ventilboden (mit einer Temperatur von 12 bis 22, bevorzugt 12 bis 17°C) und die andere Teilmenge auf einen zwischen dem dritten Fangboden und dem obersten Ventilboden etwa mittig gelegenen Ventilboden in die erfindungsgemäße Trennkolonne rückgeführt (mit einer Temperatur von 18 bis 32, bevorzugt 18 bis 25°C).

Ein Teil der Abkühlung wird dadurch bewirkt, dass das Sauerwasser über den Propylenverdampfer geführt wird, um flüssig gelagertes Propylen für die heterogen katalysierte Gasphasenoxidation in die Gasphase zu überführen.

Leichter als Wasser flüchtige Bestandteile werden am Kopf der erfindungsgemäßen Trennkolonne gasförmig abgezogen und im Normalfall wenigstens teilweise als Verdünnungsgas in die Gasphasenoxidation rückgeführt. Um im Kreisgasverdichter Kondensation zu vermeiden, wird das Abgas zuvor durch indirekten Wärmeaustausch überhitzt. Der nicht im Kreis geführte Teil des Abgases wird normalerweise der Verbrennung zugeführt.

Zum Zweck der Polymerisationsinhibierung wird dem obersten der erfindungsgemäßen hydraulisch abgedichteten Querstrom-Stoffaustauschböden eine Lösung von p-Methoxyphenol = MEHQ in Reinprodukt und gegebenenfalls zusätzlich eine Lösung von Phenothiazin in Reinprodukt zugeführt. Diese Lösung wird auch zur Reinproduktstabilisierung verwendet.

Zusätzlich wird etwa in der Mitte des Kolonnenabschnitts mit den erfindungsgemäßen hydraulisch abgedichteten Querstrom-Stoffaustauschböden eine Lösung von Phenothiazin (= PTZ) in Reinprodukt zugeführt.

Prinzipiell kann die Sauerwasserbildung auch außerhalb der erfindungsgemäßen Trennkolonne praktiziert werden. In diesem Fall wird man aus dem dann am Kopf der Kolonne entweichenden Leichtsiedergasstrom in zweckmäßiger Weise durch direkte Kühlung in einem an Einbauten freien oder Einbauten enthaltenden Raum mittels einer zweiten Quenchflüssigkeit im wesentlichen Wasser auskondensieren. Das dabei gewonnene Kondensat ist wiederum das Sauerwasser. Einen Teil des Sauerwassers wird man dann in sinnvoller Weise zur Erhöhung der Trennleistung am Kopf der Kolonne in selbige rückführen. Ein weiterer Teil des Sauerwassers wird zweckmäßigerweise ausgeschleust und entsorgt (z.B. verbrannt) und der verbleibende Teil des Sauerwassers wird üblicherweise in einem externen Wärmetauscher indirekt abgekühlt und als die zweite Quenchflüssigkeit verwendet. Leichter als Wasser flüchtige Bestandteile des Leichtsiederstroms bilden wiederum Abgas, das normalerweise wenigstens teilweise als Kreisgas in die Gasphasenoxidation rückgeführt wird.

Vorzugsweise erstrecken sich die Dual-Flow-Böden beim erfindungsgemäßen Verfahren in der erfindungsgemäßen Trennkolonne in etwa bis zu dem Querschnitt in der Trennkolonne, von dem ab die Acrylsäuregehalte der Rücklaufflüssigkeit zum Kolonnenkopf hin betrachtet ≤ 20 Gew.-%, bezogen auf das Gewicht der Rücklaufflüssigkeit, betragen.

Die Anzahl an Dual-Flow-Böden beträgt für das erfindungsgemäße Trennverfahren in der Regel 25 bis 45. Ihr Öffnungsverhältnis liegt zweckmäßig bei 15 bis 25 %. Als Durchtrittsstellen weisen die erfindungsgemäß einzusetzenden Dual-Flow-Böden bevorzugt kreisrunde Löcher mit einem einheitlichen Kreisdurchmesser auf. Letzterer beträgt zweckmäßig 10 bis 20 mm. Bei Bedarf kann man in der erfindungsgemäßen Trennkolonne die Lochdurchmesser von oben nach unten verjüngen oder vergrößern und/oder die Anzahl der Löcher vermindern oder vergrößern (z.B. kann der Lochdurchmesser einheitlich 14 mm betragen und das Öffnungsverhältnis von oben nach unten von 17,4 % auf 18,3 % zunehmen). Erfindungsgemäß kann jedoch die Lochanzahl über alle Dual-Flow-Böden auch konstant sein. Ferner sind die kreisrunden Löcher über den individuellen Dual-Flow-Böden bevorzugt in strenger Dreiecksteilung gleichmäßig angeordnet (vgl. DE-A 10230219).

Ferner zeigt der Stanzgrat der in den erfindungsgemäß mitzuverwendenden Dual-Flow-Böden herausgestanzten Durchtrittsöffnungen in der erfindungsgemäßen Trennkolonne bevorzugt nach unten (unerwünschte Polymerisatbildung wird dadurch gemindert). Erfindungsgemäß sinnvoll ist es, wenn die Anzahl der für das erfindungsgemäße Verfahren eingesetzten Dual-Flow-Böden etwa 10 bis 15 theoretischen Trennstufen entspricht.

Die Anzahl der sich an die Dual-Flow-Böden in der erfindungsgemäßen Trennkolonne anschließenden erfindungsgemäßen hydraulisch abgedichteten Querstrom-Stoffaustauschböden wird in der Regel 30 bis 50 betragen. Ihr Öffnungsverhältnis wird erfindungsgemäß zweckmäßig 5 bis 25 %, bevorzugt 10 bis 20 % betragen (das Öffnungsverhältnis gibt ganz generell den prozentualen Anteil der Durchtrittsquerschnitte am Gesamtquerschnitt wieder; er liegt bei den erfindungsgemäßen Querstrom-Stoffaustauschböden ganz generell zweckmäßig im vorgenannten Bereich).

Einflutige erfindungsgemäße Querstrom-Stoffaustauschböden werden erfindungsgemäß bevorzugt eingesetzt.

In der Regel wird die Anzahl der erfindungsgemäßen hydraulisch abgedichteten Querstromböden für das erfindungsgemäße Verfahren so bemessen, dass sie etwa 10 bis 30, häufig 25 theoretischen Trennstufen entspricht.

Sowohl die erfindungsgemäßen hydraulisch abgedichteten Querstromböden als auch die für das erfindungsgemäße Verfahren zu verwendenden Ventilböden weisen wenigstens einen Ablaufschacht auf. Sie können beide sowohl einflutig als auch mehrflutig, z.B. zweiflutig gestaltet sein, Dabei können sie auch bei einflutiger Gestaltung mehr als einen Ablaufschacht aufweisen. In der Regel sind auch die Zulaufschächte der Ventilböden hydraulisch abgedichtet.

Im übrigen können bei den erfindungsgemäßen hydraulisch abgedichteten Querstromböden, von der Orientierung der Treibschlitze abgesehen, sowohl Durchtrittsstellen, Kamine als auch die Hauben wie bei den bekannten Thormann-Böden gestaltet und angeordnet werden.

Die Polymerisationsinhibierung des Quenchsystems für das Produktgasgemisch der Gasphasenoxidation wird sowohl über die in der zum Quenchen verwendeten Sumpfflüssigkeit enthaltenen Polymerisationsinhibitoren als auch über die im gegebenenfalls zum Quenchen mitverwendeten Rückspaltkondensat enthaltenen Polymerisationsinhibitoren bewerkstelligt.

Wie bereits erwähnt, ist es in der Regel zweckmäßig, die Rückspaltung unter Zusatz eines anorganischen Salzes, dessen Zusatz zu einer wässrigen Lösung einer starken Brönsted-Säure den pH-Wert der wässrigen Lösung ins alkalische verschiebt, vorzunehmen, wie es z.B. die DE-C 2407236 empfiehlt. Bezogen auf die der Rückspaltung zu unterwerfende Menge an Sumpfflüssigkeit wird die zuzusetzende Menge an basischem Rückspaltkatalysator in der Regel 0,1 bis 5 Gew.-% betragen. Beispiele für erfindungsgemäß geeignete Rückspaltkatalysatoren sind KOH, K₂CO₃, KHCO₃, NaOH, Na₂CO₃, NaHCO₃, LiOH, Li₂CO₃ und CaCO₃. D.h., geeignete Rückspaltkatalysatoren sind insbesondere die Alkali- und/oder Erdalkalisalze von schwachen anorganischen oder organischen Brönstedsäuren wie z.B. Phosphorsäure, Borsäure, Kohlensäure, Ameisensäure oder Essigsäure. Mit anderen Worten eigenen sich somit als Rückspaltkatalysatorn vor allem Alkali- und/oder Erdalkaliphosphate, -borate, -carbonate, -hydrogencarbonate, -formiate und -acetate.

Vorzugsweise wird man die Rückspaltkatalysatoren so wählen, dass sie unter den Rückspaltbedingungen in der Sumpfflüssigkeit löslich sind. Gemäß US-A 4293347 wirkt sich auch ein Beisein von Dialkylphthalaten vorteilhaft auf die relevante Rückspaltung aus. In der Regel wird eine integrierte Rückspaltung bei einem Druck von ≤ 1 bar und bei einer Temperatur von 130 bis 250°C durchgeführt.

Mit Vorteil beträgt der Druck für die Rückspaltung 25 bis 600, vorzugsweise 100 bis 300 mbar. Die Rückspalttemperatur liegt zweckmäßigerweise bei 140 bis 230°C, vorzugsweise bei 160 bis 200°C. Wird die Rückspaltung kontinuierlich durchgeführt (das erfindungsgemäße Verfahren wird vorzugsweise kontinuierlich durchgeführt), so sollte die Verweilzeit im Rückspaltreaktor 0,5 bis 4 h betragen. In einfacher Weise läßt sich die erfindungsgemäß zu integrierende Rückspaltung in einem Zwangsumlaufentspannungsverdampfer durchführen. Wie in der US-A 5733075 sowie in der DE-A 4101879 beschrieben, läßt sich die Rückspaltung der Acrylsäureoligomeren prinzipiell ohne Zusatz spezieller saurer oder basischer Spaltkatalysatoren durchführen. Als solche kommen Dodecylbenzolsulfonsäure, p-Toluolsulfonsäure, Schwefelsäure, die festen sauren Katalysatoren der JP-A 3-178949 oder die bereits erwähnten anorganischen Salze in Betracht. In der Regel.wird der Rückspaltreaktor während der Rückspaltung von Luft durchströmt.

Der im Spaltreaktor-verbleibende schwerflüchtige Rückstand wird beim erfindungsgemäßen Verfahren regelmäßig seiner Entsorgung, z.B. seiner Verbrennung, zugeführt. Durch Zusatz eines organischen Lösungsmittels, z.B. von Methanol, wird der schwerflüchtige Spaltrückstand dabei bei Bedarf fluid gehalten.

Die Temperatur im Sumpf der erfindungsgemäßen Kolonne liegt in typischer Weise bei 90 bis 150°C, wohingegen die Temperatur auf dem obersten erfindungsgemäßen hydraulisch abgedichteten Querstromboden in typischer Weise bei 40 bis 95°C, häufig bei 60 bis 90°C liegt. Die Entnahmetemperatur der rohen Acrylsäure liegt meist bei 80 bis 110°C.

Die Mitverwendung der erfindungsgemäßen Stoffaustauschböden bedingt eine verbesserte Trennwirkung, die sich durch einen verringerten Acrylsäuregehalt im Sauerwasser ausweist. Weiterhin ermöglichen sie einen stabileren Betrieb der erfindungsgemäßen Trennkolonne, was sich in einer geringeren Druckverlustschwankung je Boden ausweist.

Es sind so Reinheiten der via Seitenabzug entnommenen rohen Acrylsäure von ≥ 96,6 Gew.-% möglich. In der Regel liegen dabei folgende Nebenkomponentengehalte in der rohen Acrylsäure vor:

| | | |
|---|---|---|
| ≤ 0,9 | Gew.-% | Essigsäure, |
| ≤ 1,13 | Gew.-% | Wasser, |
| ≤ 0,025 | Gew.-% | Ameisensäure, |
| ≤ 0,0015 | Gew.-% | Formaldehyd, |
| ≤ 0,01 | Gew.-% | Acrolein, |
| ≤ 0,075 | Gew.-% | Propionsäure, |
| ≤ 0,42 | Gew.-% | Furfurale, |
| ≤ 0,025 | Gew.-% | Allylacrylat, |
| ≤ 0,0001 | Gew.-% | Allylformiat, |
| ≤ 0,5 | Gew.-% | Benzaldehyd, |
| ≤ 0,17 | Gew.-% | Maleinsäureanhydrid, |
| ≤ 0,5 | Gew.-% | Diacrylsäure, |
| ≤ 0,025 | Gew.-% | Phenothiazin und |
| ≤ 0,014 | Gew.-% | MEHQ. |

Darüber hinausgehende Nebenkomponentengehalte sind in der Regel nicht detektierbar. Das erfindungsgemäße Verfahren bedarf in der Regel keiner Energiezufuhr. Vielmehr bringt das Produktgasgemisch einen ausreichenden Energieinhalt mit.

### Beispiel und Vergleichsbeispiel

### 1. Vergleichsbeispiel (beschrieben wird der stationäre Zustand)

Aus einer heterogen katalysierten Gasphasenoxidation von Propylen wurde ein eine Temperatur von 270°C aufweisendes Produktgasgemisch der nachfolgenden Zusammensetzung erhalten:

| | | |
|---|---|---|
| 10,2874 | Gew.-% | Acrylsäure, |
| 0,2137 | Gew.-% | Essigsäure, |
| 3,8823 | Gew.-% | Wasser, |
| 0,0230 | Gew.-% | Ameisensäure,. |
| 0,0866 | Gew.-% | Formaldehyd, |
| 0,1590 | Gew.-% | Acrolein, |
| 0,0024 | Gew.-% | Propionsäure, |
| 0,0030 | Gew.-% | Furfural, |
| 0,0013 | Gew.-% | Allylacrylat, |
| 0,0003 | Gew.-% | Allylformiat, |
| 0,0022 | Gew.-% | Benzaldehyd, |
| 0,1182 | Gew.-% | Maleinsäureanhydrid, |
| 0,0098 | Gew.-% | Benzoesäure, |
| 1,9668 | Gew.-% | CO₂, |
| 0,6426 | Gew.-% | CO, |
| 0,6021 | Gew.-% | Propan, |
| 0,3199 | Gew.-% | Propylen, |
| 3,3350 | Gew.-% | O₂, und |
| 78,3442 | Gew.-% | N₂. |

Weitere Bestandteile wurden nicht detektiert.

Das Produktgasgemisch (190363 kg/h) wurde in einem im Gleichstrom betriebenen Sprühkühler durch direkte Kühlung auf eine Temperatur von 136,4°C abgekühlt.

Die zur Direktkühlung verwendete Flüssigkeit (Quenchflüssigkeit) war ein Gemisch aus Sumpfflüssigkeit, die der im folgenden beschriebenen Trennkolonne entnommen wurde, und aus polymerisationsinhibiertem Rückspaltkondensat (erhalten durch Rückspaltung einer Teilmenge der Quenchflüssigkeit, Kondensation der resultierenden Gasphase und Zusatz von polymerisationsinhibiertem Reinprodukt).

Die Zusammensetzung der Quenchflüssigkeit lautete:

| | | |
|---|---|---|
| 16,0276 | Gew.-% | Acrylsäure, |
| 0,0861 | Gew.-% | Essigsäure, |
| 0,3278 | Gew.-% | Wasser, |
| 0,0045 | Gew.-% | Ameisensäure, |
| 0,0004 | Gew.-% | Formaldehyd, |
| 0,0070 | Gew.-% | Acrolein, |
| 0,0095 | Gew.-% | Propionsäure, |
| 0,2356 | Gew.-% | Furfurale, |
| 0,0004 | Gew.-% | Allylacrylat, |
| 0,7910 | Gew.-% | Benzaldehyd, |
| 4,8366 | Gew.-% | Maleinsäureanhydrid, |
| 4,9676 | Gew.-% | Benzoesäure, |
| 25,7217 | Gew.-% | Diacrylsäure, |
| 32,9952 | Gew.-% | Polyacrylsäure (Michael-Addukt), |
| 1,3116 | Gew.-% | Phenothiazin, |
| 0,9970 | Gew.-% | MEHQ, und |
| 11,6806 | Gew.-% | sonstige hochsiedende Bestandteile. |

Das polymerisationsinhibierte Rückspaltkondensat (1588 kg/h) wies folgende Zusammensetzung auf:

| | | |
|---|---|---|
| 72,0817 | Gew.-% | Acrylsäure, |
| 0,1114 | Gew.-% | Essigsäure, |
| 0,4236 | Gew.-% | Wasser, |
| 0,0058 | Gew.-% | Ameisensäure, |
| 0,0006 | Gew.-% | Formaldehyd, |
| 0,0090 | Gew.-% | Acrolein, |
| 0,0122 | Gew.-% | Propionsäure, |
| 0,3000 | Gew.-% | Furfural, |
| 0,0006 | Gew.-% | Allylacrylat, |
| 1,0000 | Gew.-% | Benzaldehyd, |
| 6,0000 | Gew.-% | Maleinsäureanhydrid, |
| 5,2295 | Gew.-% | Benzoesäure, |
| 13,6970 | Gew.-% | Diacrylsäure, |
| 0,0287 | Gew.-% | Phenothiazin, und |
| 1,1000 | Gew.-% | MEHQ. |

Ein Teil (2049 kg/h) der Quenchflüssigkeit wurde kontinuierlich entnommen und der Rückspaltung zugeführt. Diese wurde bei einem Druck von 300 mbar und bei einer Temperatur von 181,4°C durchgeführt. Das Spaltgas verließ die Rückspaltvorrichtung über einen Zentrifugaltropfenabscheider mit einer Temperatur von 175°C.

Der Spaltrückstand würde durch Zusatz von Methanol fluid gehalten und der Verbrennung zugeführt.

Die Restmenge der Quenchflüssigkeit (595399 kg/h) wurden durch einen Rohrbündelwärmetauscher geführt und anschließend mit einer Temperatur von 130,7°C zur Direktkühlung des Produktgasgemisches verwendet.

Das bei der Direktkühlung resultierende Gemisch aus abgekühltem Produktgasgemisch und Quenchflüssigkeit wurde in den Sumpf der Trennkolonne (für die fraktionierende Kondensation) geführt. Die Höhe der Trennkolonne betrug 54,3 m.

Der Durchmesser der Trennkolonne betrug im Bereich der Thormann-Boden 6,5 m und ansonsten 6,0 m.

In den Sumpfraum der Kolonne war ein Zentrifugaltropfenabscheider integriert, der verhinderte, dass Tröpfchen der Quenchflüssigkeit aus dem Sumpfraum heraus nach oben mitgerissen wurden.

Der Sumpfraum wurde auf einer Kolonnenhöhe (wie alle Höhen vom Sumpfboden aus gerechnet) von 7,80 m durch einen ersten Fangboden (Sammelboden; Kaminböden mit 16 etwa gleichverteilten bedachten Kaminen; Kamindurchmesser: 600 mm; Kaminhöhe: 1 m) abgeschlossen.

Der Sammelboden war doppelwandig mit 2° Gefälle nach Innen und mit zentraler Abzugstasse und Abzugsstutzen (DN - 200) gestaltet. Der freie Gasquerschnitt betrug ca. 30 %.

Von diesem ersten Fangboden wurden 55740 kg/h Rücklaufflüssigkeit entnommen und in den Sumpfraum geführt. Die Zusammensetzung dieser Rücklaufflüssigkeit war:

| | | |
|---|---|---|
| 82,0869 | Gew.-% | Acrylsäure, |
| 0,3204 | Gew.-% | Essigsäure, |
| 1,0184 | Gew.-% | Wasser, |
| 0,0123 | Gew.-% | Ameisensäure, |
| 0,0015 | Gew.-% | Formaldehyd, |
| 0,0131 | Gew.-% | Acrolein, |
| 0,0556 | Gew.-% | Propionsäure, |
| 1,2451 | Gew.-% | Furfurale, |
| 0,0022 | Gew.-% | Allylacrylat, |
| 0,0001 | Gew.-% | Allylformiat, |
| 2,8634 | Gew.-% | Benzaldehyd, |
| 8,7895 | Gew.-% | Maleinsäureanhydrid, |
| 0,6606 | Gew.-% | Benzoesäure, |
| 2,6725 | Gew.-% | Diacrylsäure, |
| 0,0477 | Gew.-% | Phenothiazin, und |
| 0,2289 | Gew.-% | MEHQ. |

Die Temperatur war 102,7°C. Der Druck lag bei 1,48 bar.

2,0 m oberhalb des ersten Fangbodens befand sich der erste, von zunächst 15 Dual-Flow-Böden. Diese Dual-Flow-Böden (Lochdurchmesser einheitlich 14 mm, Lochanzahl einheitlich 33678, Öffnungsverhältnis einheitlich 18 %) waren äquidistant angebracht mit einem Bodenabstand von 380 mm. Die Durchtrittsöffnungen bestanden aus kreisrunden Öffnungen des einheitlichen Durchmessers von 14 mm, wobei der Stanzgrat in der Trennkolonne nach unten zeigte. Das Öffnungsverhältnis betrug ca. 20 %. Die Anordnung der Mittelpunkte der Durchtrittskreise folgte einer strengen Dreiecksteilung. Der nächstliegende Abstand zweier Kreismittelpunkte lag bei 30 mm.

Der fünfzehnte Dual-Flow-Boden war als Verteilerboden gestaltet. Zu diesem Zweck enthielt er zwei Einsteckrohre (DN - 150) mit 40 Auslaufbohrungen (Durchmesser: 15 mm) je Einsteckrohr.

Die erste Serie von Dual-Flow-Böden wurde mit einem zweiten Fangboden (Sammelboden; Kaminboden mit 16 ca. gleichmäßig verteilten bedachten Kaminen; Kaminhöhe ca. 1,70 m, Zentrale Abzugstasse mit Abzugsstutzen (DN - 250), freier Gasquerschnitt von - 30 %) abgeschlossen, der 1,50 m oberhalb des letzten Dual-Flow-Bodens untergebracht war.

Von diesem zweiten Fangboden wurde kontinuierlich rohe Acrylsäure entnommen, die wie folgt zusammengesetzt war:

| | | |
|---|---|---|
| 96,6109 | Gew.-% | Acrylsäure, |
| 0,9 | Gew.-% | Essigsäure, |
| 1,1219 | Gew.-% | Wasser, |
| 0,0250 | Gew.-% | Ameisensäure, |
| 0,0015 | Gew.-% | Formaldehyd, |
| 0,0098 | Gew.-% | Acrolein, |
| 0,0748 | Gew.-% | Propionsäure, |
| 0,4141 | Gew.-% | Furfurale, |
| 0,0025 | Gew.-% | Allylacrylate, |
| 0,0001 | Gew.-% | Allylformiat, |
| 0,1441 | Gew.-% | Benzaldehyd, |
| 0,1667 | Gew.-% | Maleinsäureanhydrid, |
| 0,4935 | Gew.-% | Diacrylsäure, |
| 0,0216 | Gew.-% | Phenothiazin, und |
| 0,0134 | Gew.-% | MEHQ. |

89638 kg/h der mit einer Temperatur von 99,5°C entnommenen rohen Acrylsäure wurden auf den fünfzehnten Dual-Flow-Boden (von unten gerechnet) rückgeführt.

33152 kg/h der mit einer Temperatur von 99,5°C entnommenen rohen Acrylsäure wurden einer Fallfilmkristallisation mit zwei Reinigungsstufen gemäß EP-A 616 998 zugeführt. Dazu wurde ihre Temperatur durch indirekten Wärmetausch auf 29°C abgekühlt.

Das Reinprodukt der ersten Reinigungsstufe wurde im vollen Umfang (26940 kg/h) der zweiten Reinigungsstufe zugeführt. Seine Zusammensetzung war wie folgt:

| | | |
|---|---|---|
| 98,9773 | Gew-.% | Acrylsäure, |
| 0,4552 | Gew.-% | Essigsäure, |
| 0,2696 | Gew.-% | Wasser, |
| 0,0127 | Gew.-% | Ameisensäure, |
| 0,0003 | Gew.-% | Formaldehyd, |
| 0,0019 | Gew.-% | Acrolein, |
| 0,0425 | Gew.-% | Propionsäure, |
| 0,0802 | Gew.-% | Furfural, |
| 0,0005 | Gew.-% | Allylacrylat, |
| 0,0279 | Gew.-% | Benzaldehyd, |
| 0,0323 | Gew.-% | Maleinsäureanhydrid, |
| 0,0955 | Gew.-% | Diacrylsäure, und |
| 0,0042 | Gew.-% | Phenothiazin. |

Die Mutterlauge der zweiten Reinigungsstufe wurde vollständig in die erste Reinigungsstufe rückgeführt. Die Mutterlauge der ersten Reinigungsstufe wurde in einen Tank gefahren und von dort aus mit einer Temperatur von 90°C in einer Menge von 12678 kg/h auf den fünfzehnten Dual-Flow-Boden (von unten gerechnet) rückgeführt. Die Zusammensetzung dieser rückgeführten Mutterlauge war wie folgt:

| | | |
|---|---|---|
| 91,6109 | Gew.-% | Acrylsäure, |
| 2,0442 | Gew.-% | Essigsäure, |
| 2,8648 | Gew.-% | Wasser, |
| 0,0569 | Gew.-% | Ameisensäure, |
| 0,0038 | Gew.-% | Formaldehyd, |
| 0,0252 | Gew.-% | Acrolein, |
| 0,1616 | Gew.-% | Propionsäure, |
| 1,0668 | Gew.-% | Furfural, |
| 0,0064 | Gew.-% | Allylacrylat, |
| 0,3713 | Gew.-% | Benzaldehyd, |
| 0,4295 | Gew.-% | Maleinsäureanhydrid, |
| 1,2712 | Gew.-% | Diacrylsäure, |
| 0,0556 | Gew.-% | Phenothiazin, und |
| 0,0350 | Gew.-% | MEHQ. |

Der zweiten Reinigungsstufe wurden 20475 kg/h an Reinprodukt entnommen, das folgende Zusammensetzung aufwies:

| | | |
|---|---|---|
| 99,709 | Gew.-% | Acrylsäure, |
| 0,1915 | Gew.-% | Essigsäure, |
| 0,0428 | Gew.-% | Wasser, |
| 0,0053 | Gew.-% | Ameisensäure, |
| 0,0002 | Gew.-% | Acrolein, |
| 0,0210 | Gew.-% | Propionsäure, |
| 0,0100 | Gew.-% | Furfural, |
| 0,0001 | Gew.-% | Allylacrylate, |
| 0,0035 | Gew.-% | Benzaldehyd, |
| 0,0040 | Gew.-% | Maleinsäureanhydrid, |
| 0,0119 | Gew.-% | Diacrylsäure, und |
| 0,0005 | Gew.-% | Phenothiazin. |

1991 kg/h dieser Reinacrylsäure wurden mit PTZ versetzt, so dass eine Lösung entstand, die 1,5 Gew.-% PTZ gelöst enthielt (Inhibitorlösung 1).

38 kg/h dieser Reinacrylsäure wurden mit MEHQ versetzt, so dass eine Lösung entstand, die 30 Gew.-% MEHQ enthielt (Inhibitorlösung 2).

10 kg/h der Inhibitorlösung 1 wurden verwendet, um das Kondensat der Rückspaltung zu stabilisieren. 243 kg/h der Inhibitorlösung 1 wurden verwendet, um 18496 kg/h Reinacrylsäure zu stabilisieren.

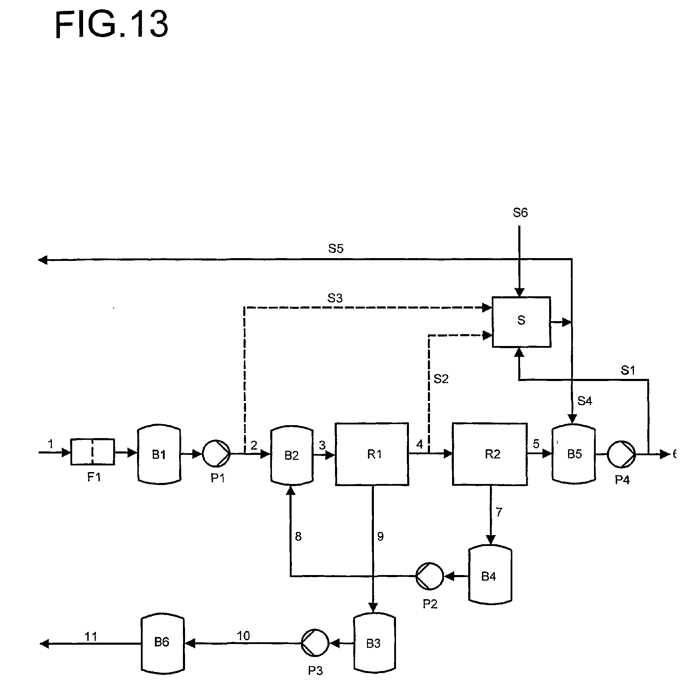

Im einzelnen wurde die Fallfilmkristallisation wie folgt durchgeführt (vgl. Figur 13). Der der Fallfilmkristallisation zugeführte abgekühlte Strom an roher Acrylsäure wurde zunächst über ein Filter F1 (zum Zweck von Polymerisatabtrennung; Siebkorbfilter mit einer Maschenweite von ca. 250 µm) gefahren und dann in einen Lagertank B1 geführt (das gesamte Kristallisationsequipment war aus Edelstahl gefertigt; der Lagertank war mit einer Heizvorrichtung ausgerüstet; typische Volumina des Lagertanks B1 liegen im Bereich von 250 bis 600 m³; üblicherweise ist der Lagertank B1 ungerührt).

Von dort aus wurde die rohe Acrylsäure mittels der Pumpe P1 als Strom 2 in einen Stufenbehälter B2 der Schichtkristallisationsanlage gefahren. Da es sich bei der zweistufigen Schichtkristallisation um ein diskontinuierliches Verfahren handelt, wurde die erste Reinigungsstufe vom Stufenbehälter B2 aus absatzweise mit roher Acrylsäure beschickt (Strom 3). Nach partieller Kristallisation dieser Feedsäure wurde die verbliebene flüssige Restsäure und die beim Schwitzen anfallende Schwitzsäure (siehe die Beschreibung des Stufenablaufs im Nachfolgenden) als Strom 9 in den Behälter B3 abgelassen. Die in B3 gesammelte, an Verunreinigungen angereicherte Acrylsäure wurde über die Pumpe P3 als Strom 10 kontinuierlich in den Tank B6 gefördert und von dort aus als Strom 11 auf den fünfzehnten Dual-Flow-Boden (von unten gerechnet) der Trennkolonne zurückgefahren. Die nach Beendigung des Schwitzens verbliebene Kristallschicht der Reinigungsstufe R1 wurde im Kristallisator (primär durch indirekte Wärmezufuhr) aufgeschmolzen und im gleichen Kristallisationsapparat unmittelbar der zweiten Reinigungsstufe R2 zur Verfügung gestellt (Strom 4). Die in der Reinigungsstufe R2 nach partieller Kristallisation und Schwitzen verbliebene Restflüssigkeit wurde als Strom 7 in den Behälter B4 abgelassen und über die Pumpe 2 als Strom 8 in den Stufenbehälter B2 transferiert. Das nach Schwitzen verbliebene Kristallisat der Reinigungsstufe R2 wurde im Kristallisator in gleicher Weise wie im Fall der Reinigungsstufe 1 aufgeschmolzen und danach als Strom 5 in den Auffangbehälter B5 abgelassen (ein Teilstrom wurde zur Herstellung der Inhibitorlösung 2 verwendet).

Das Reinprodukt der zweiten Reinigungsstufe R2 wurde im Behälter S zur Herstellung der Inhibitorlösung 1 unter Zusatz des Stabilisators 6 (PTZ) verwendet (anstelle und/oder neben Reinacrylsäure könnte zur Herstellung der Inhibitorlösung 1 und/ oder 2 auch Seitenabzug S3 und/oder das geschmolzene Kristallisat der Stufe R1 (d.h., S2) verwendet werden). Die Inhibitorlösung 1 wurde als Strom S4 dem geschmolzenen Reinprodukt der Reinigungsstufe R2- im Behälter B5 zugesetzt, um die gewünschte Stabilisatorkonzentration in der Reinacrylsäure einzustellen. Als Strom 5 wurde Inhibitorlösung 1 u.a. zum Zweck der Stabilisierung der Trennkolonne zugeführt. Die Reinigungsstufen wurden sich in der Abfolge R1-R2, R1-R2, R1-R2, .... wiederholend angewandt.

Beide Reinigungsstufen R1 und R2 wurden in zwei Fallfilmkristallisatoren der Fa. Sulzer Chemtec AG, die parallel betrieben wurden, praktiziert. Jeder Kristallisator enthielt 1278 Fallfilmrohre der Länge 12 m und des Außendurchmessers 70 mm. Der Innendurchmesser betrug 67 mm. In den Rohren strömte die mit einer Umwälzpumpe aufgegebene zu kristallisierende Säure als Fallfilm über die Innenoberfläche. Über die Außenoberfläche der Rohre konnte ein ebenfalls über eine Umwälzpumpe aufgegebenes Wärmeträgermedium (WTM) in Form eines Fallfilms geführt werden. Als WTM wurde ein Wasser/Glykol-Gemisch verwendet, dessen Gefrierpunkt <-25°C betrug (alternativ könnte auch ein Wasser/Methanol-Gemisch verwendet werden, dessen Gefrierpunkt <-25°C beträgt). Die maximale Beschickungsmenge der beiden Kristallisatoren liegt bei etwa 120 t zu reinigender Säure/Batch.

Die zur Kristallisationsanlage gehörenden Behälter B2 bis B5 waren ungerührte, begleitbeheizte (mit Begleitheizungsrohren umwickelt, durch die ein entsprechendes, erwärmbares Wasser/Glykol-Gemisch geschickt wurde) Behälter mit Volumina zwischen 40 und 150 m³.

Die beiden Kristallisatoren waren an ein Heiz-/Kühlsystem angeschlossen, mit dem die Temperatur des über die Außenflächen der Kristallisationsrohre strömenden Wärmeträgermediums bedarfsgerecht variiert werden konnte.

Das Heiz-/Kühlsystem bestand im wesentlichen aus einer Kompressionskälteanlage als Lieferant Für die Kühl- und Heizenergie und Speicherbehältern zur Pufferung von Wärmeträgermedien mit unterschiedlichen Temperaturen.

Die individuelle Reinigungsstufe R1 oder R2 wurde wie folgt gestaltet. Nach Befüllen des Kristallisators mit der zu reinigenden Säure und unter Umwälzung der Säure wurde mit dem Wärmeträger ein Abkühlprogramm gestartet. Unter Absenkung der Temperatur wurde auf den Innenoberflächen der Kristallisationsrohre eine zunehmend dicke Kristallschicht ausgefroren. Bei Erreichen der angestrebten Masse an ausgefrorener Säure wurden Abkühlung und Säureumwälzung gestoppt und die verbliebene restliche flüssige Säure abgelassen. Anschließend wurde unter Anhebung der Wärmeträgertemperatur in einem sogenannten Schwitzschritt die Temperatur der Kristallschichten erhöht. Dabei trat ein partielles Schmelzen der Kristallschichten, vorwiegend in Bereichen unreineren Kristallisats (das einen durch Verunreinigungen erniedrigten Schmelzpunkt aufweist) auf. Die anfallende Schwitz-Flüssigkeit wurde ebenfalls aus dem Kristallisator abgelassen. Danach wurde unter weiterer Anhebung der Temperatur des WTM über den Schmelzpunkt der reinen Säure hinaus die nach Beendigung des Schwitzvorgangs verbliebene Kristallschicht aufgeschmolzen. Dabei lief ab ausreichendem Flüssigkeitsanfall die Säureumwälzpumpe wieder mit. Nach vollständigem Aufschmelzen der Kristallschichten wurde die erhaltene Schmelze als gereinigte Flüssigkeit abgelassen.

Die in typischer weise für die Reinigungsstufen geeigneten Betriebsbedingungen gibt die nachstehende Tabelle wieder, wobei die Werte in Klammern den angewandten Bereich angeben.

**Tabelle**

| | **Stufe R1** | **Stufe R2** |
|---|---|---|
| **Arbeitsschritt Kristallisieren** | | |
| Starttemperatur WTM (°C) | 0 bis 6 | 1 bis 7 |
| | (2 bis 4) | (3 bis 5) |
| Kühlgradient WTM (K/min) | 0,3 bis 0,7 | 0,3 bis 0,7 |
| | (0,4 bis 0,6) | (0,4 bis 0,6) |
| Ausgefrorener Masseanteil | 60 bis 80 | 65 bis 85 |
| (Gew.-% der Befüllungsmasse) | (70 bis 80) | (73 bis 83) |

| **Arbeitsschritt Schwitzen** | | |
|---|---|---|
| Starttemperatur WTM (°C) | 10 bis 14 | 11 bis 15 |
| | (12 bis 13) | (13 bis 14) |
| Heizgradient WTM (K/min) | 0,2 bis 0,6 | 0,2 bis 0,6 |
| | (0,3 bis 0,5) | (0,3 bis 0,5) |
| Abgeschwitzter Masseanteil | 1 bis 10 | 1 bis 10°C |
| (Gew.-% der Befüllungsmasse) | (4 bis 6) | (4 bis 6°C) |

| **Arbeitsschritt Aufschmelzen** | | |
|---|---|---|
| Temperatur WTM (°C) | 20 bis 40°C | 20 bis 40°C |
| | (30 bis 35°C) | (30 bis 35°C) |

Die verwendeten Pumpen waren Kreiselpumpen. Im übrigen wurde wie in der EP-A 616998 vorgegangen.

10,50 m oberhalb des zweiten Fangbodens befand sich der erste von 21 weiteren Dual-Flow-Böden der bereits beschriebenen Art (Lochdurchmesser wieder einheitlich 14 mm, Lochanzahl jedoch einheitlich 32020 und Öffnungsverhältnis einheitlich 17,4 %), die wieder äquidistant mit einem Bodenabstand von 380 mm angeordnet waren. Der letzte dieser 21 Dual-Flow-Böden war mit Überlaufrinnen mit gezacktem Überlauf als Verteilerboden gestaltet.

800 mm oberhalb des letzten Dual-Flow-Bodens begann sich die Trennkolonne konisch zu erweitern. 1500 mm oberhalb des letzten Dual-Flow-Bodens endete diese Erweiterung bei einem Kolonnendurchmesser von 6,50 m.

Auf dieser Höhe, d.h., 1,50 m oberhalb des letzten Dual-Flow-Bodens, begann eine äquidistante (Bodenabstand = 1500 mm) Anordnung von 28 konventionellen, einflutigen Thormann-Böden. Die Thormann-Böden waren derart ausgestaltet, dass über die Anordnung der Treibschlitze in den Hauben der Thormannn-Böden in in QuerstromRichtung aufeinanderfolgenden Rinnen jeweils eine zueinander entgegengesetzte Strömungsrichtung der Flüssigkeit erzeugt wurde. Das Öffnungsverhältnis der Thormann-Böden betrug 14 %. Das Verhältnis von Kaminfläche zu Schlitzaustrittsfläche betrug 0,8. Die Kaminhöhe und die Höhe des Ablaufwehrs betrug 40 mm. Die Bodenfreiheit der Glocke (Abstand zwischen Unterkante Schlitz und Boden) betrug 10 mm. Die Schlitzhöhe betrug 15 mm. Der Winkel zwischen ausgestelltem Schlitz und Längskante der Haube betrug 30 Grad. Die Länge der Längskante der Haube betrug maximal 800 mm. Im Randbereich der Kolonne reduzierte sich die Haubenlänge auf bis zu 200 mm aus Gründen der Anpassung an die Rundheit der Kolonne. Der Abstand zwischen zwei in Querstromrichtung auf einer Linie befindlichen Hauben betrug 66 mm. Die Ablauffläche des Ablaufschachts betrug 1,5 % bezogen auf die Querschnittsfläche des Bodens. Die Breite zwischen den beiden unteren Längsrändern einer Haube betrug 64 mm.

Auf der Höhe des obersten Thormann-Bodens begann sich die Trennkolonne wieder konisch zu verengen. 700 mm oberhalb des obersten Thormann-Bodens war diese Verengung abgeschlossen und der Kolonnendurchmesser wieder auf 6,00 m zurückgeschrumpft.

1,70 m oberhalb des obersten Thormann-Bodens befand sich der dritte Fangboden (Sammelboden, Kaminboden mit 16 ca. gleichmäßig verteilten bedachten Kaminen, Kaminhöhe = 1,50 m).

Vom dritten Fangboden wurden 534403 kg/h Sauerwasser mit einer Temperatur von 58,1°C und bei einem Druck von 1,24 bar entnommen.

Die Zusammensetzung des Sauerwassers war:

| | | |
|---|---|---|
| 9,3861 | Gew.-% | Acrylsäure, |
| 4,4554 | Gew.-% | Essigsäure, |
| 83,2650 | Gew.-% | Wasser, |
| 0,5429 | Gew.-% | Ameisensäure, |
| 2,2754 | Gew.-% | Formaldehyd, |
| 0,0374 | Gew.-% | Acrolein, |
| 0,0079 | Gew.-% | Propionsäure, |
| 0,0087 | Gew.-% | Furfurale, |
| 0,0189 | Gew.-% | Allylformiat, |
| 0,0002 | Gew.-% | Benzaldehyd, und |
| 0,0001 | Gew.-% | MEHQ. |

26618 kg/h des entnommenen Sauerwassers (58,1°C) wurde zusammen mit 54 kg/h der Inhibitorlösung 2 (17,6°C) auf den obersten Thormann-Boden rückgeführt.

7249 kg/h des entnommenen Sauerwassers wurden der Verbrennung zugeführt.

300321 kg/h des entnommenen Sauerwassers wurden mit einer Temperatur von 15°C auf den sechsten der nachfolgend zu beschreibenden Ventilböden (von unten gerechnet) rückgeführt.

200214 kg/h des entnommenen Sauerwassers wurden mit einer Temperatur von 12,7°C auf den obersten der nachfolgend zu beschreibenden Ventilböden rückgeführt.

Auf den vierzehnten Thormann-Boden (von unten gerechnet) wurden 1742 kg/h der Inhibitorlösung 1 mit einer Temperatur von 15,1°C zugeführt.

2300 mm oberhalb des dritten Fangbodens waren in äquidistanter Anordnung (Bodenabstand = 500 mm) 11 zweiflutige Ventilböden angebracht. Die Höhe des Ablaufwehrs betrug 35 mm. Das Öffnungsverhältnis lag bei 18 % und die Summe der Ablaufflächen der Ablaufschächte von zwei aufeinanderfolgenden Ventilböden betrug 10 % der Kolonnenquerschnittsfläche. Als Ventile wurden VV12-Ventile der Fa. Stahl, DE, Viernheim verwendet.

Der Druck am Kolonnenkopf betrug 1,2 bar. Am Kolonnenkopf verließen 164001 kg/h Abgas mit einer Temperatur von 14°C und der nachfolgenden Zusammensetzung die Trennkolonne:

| | | |
|---|---|---|
| 0,0563 | Gew.-% | Acrylsäure, |
| 0,0293 | Gew.-% | Essigsäure, |
| 0,8212 | Gew.-% | Wasser, |
| 0,0015 | Gew.-% | Ameisensäure, |
| 0,1829 | Gew.-% | Acrolein, |
| 0,0004 | Gew.-% | Furfurale, |
| 0,0006 | Gew.-% | Allylformiat, |
| 2,2830 | Gew.-% | CO₂, |
| 0,7459 | Gew.-% | CO, |
| 0,6989 | Gew.-% | Propan, |
| 0,3713 | Gew.-% | Propylen |
| 3,8711 | Gew.-% | O₂, und |
| 90,9375 | Gew.-% | N₂. |

In einem indirekten Wärmetauscher wurde das Abgas auf 38°C erwärmt und anschließend wurden 97099 kg/h dieses Abgases über einen Kreisgasverdichter als Verdünnungsgas in die Gasphasenoxidation rückgeführt und 66902 kg/h des Abgases wurden der Verbrennung zugeführt.

Der Betrieb der Thormann-Böden war durch Schwankungen im Druckverlust des einzelnen Thormann-Bodens von bis zu 1 mbar je Boden gekennzeichnet. Daraus resultierten Schwankungen im Druckverlust der Dual-Flow-Böden von bis zu 0,5 mbar je Dual-Flow-Boden.

Der Druckverlust im Bereich der ersten sieben Thormann-Böden (von unten gerechnet) betrug durchschnittlich etwa 8 mbar je Thormann-Boden, um mit zunehmender Kolonnenhöhe auf 5 mbar je Thormann-Boden abzufallen.

### 2. Beispiel (stationärer Betrieb)

Es wurde wie im Vergleichsbeispiel verfahren. Die Thormann-Böden wurden jedoch derart umgestaltet, dass die Treibschlitze der Hauben von in Querströmungsrichtung aufeinanderfolgenden Strömungsrinnen jeweils paarweise in eine Richtung ausgerichtet wurden, so dass nicht mehr die Strömungen der Flüssigkeit in zwei solchen unmittelbar aufeinanderfolgenden Rinnen zueinander gegenläufig waren, sondern aufeinanderfolgende Strömungsrinnen paarweise in die gleiche Richtung förderten, und die Strömungsrichtung nur von Paar zu Paar wechselte.

Zudem wurden auf jeder Haube, die einen Richtungswechsel abgrenzte, über die gesamte Haubenlänge (maximal 800 mm, minimal 200 mm) mittig Leitbleche der Höhe 100 mm angebracht. Zudem wurde der Abstand zwischen zwei in Querstromrichtung auf einer Linie befindlichen Hauben, die einen Richtungswechsel abgrenzten, von 50 mm auf 25 mm verringert.

Bei gleicher Zusammensetzung und Menge an Produktgasgemisch der heterogen katalysierten Gasphasenoxidation und im wesentlichen gleicher Zusammensetzung der der Trennkolonne entnommenen rohen Acrylsäure verringerte sich der Acrylsäuregehalt im Sauerwasser von 9,3861 Gew.-% auf 7,5 Gew.-%, was die verbesserte Trennwirkung der erfindungsgemäß modifizierten Thormann-Böden ausweist. Gleichzeitig verringerten sich die Druckverlustschwankungen im Bereich der erfindungsgemäß modifizierten Thormann-Böden von 1 mbar auf 0,3 mbar pro Boden und die Druckverlustschwankungen im Bereich der Dual-Flow-Böden nahm von 0,5 mbar auf 0,1 mbar pro Dual-Flow-Boden ab. Dadurch war ein wesentlich stabilerer Betrieb der Trennkolonne möglich, was sich in geringeren Schwankungen der Regeltemperatur, die auf dem 45sten Boden von unten installiert war, niederschlug (wenn die Temperatur auf dem Boden 45 stieg, wurde der Sauerwasserrücklauf in die Trennkolonne erhöht, wenn diese Temperatur fiel, wurde weniger Sauerwasser in die Trennkolonne rückgeführt), und Schwankungen in der Qualität der abgezogenen rohen Acrylsäure minderte.

Das Material der Trennkolonne und der in ihr enthaltenen Böden bestand aus Edelstahl der Sorte 1.4571.

## Patentansprüche

1. Hydraulisch abgedichteter Querstrom-Stoffaustauschboden, der als Einbaute in Trennkolonnen für Stoffaustausch zwischen Flüssigkeiten und Gasen geeignet ist, mit die Flüssigkeit führenden, zueinander im Abstand parallel angeordneten Rinnen und zwischen den Rinnen angeordneten Gasdurchtrittsöffnungen, die von längeren Hauben überdeckt sind, deren beide untere Längsränder in die Flüssigkeit der Rinne eintauchen und Gasaustrittschlitze mit Leitflächen aufweisen, die den Gasaustritt in die Flüssigkeit in eine schräge Richtung leiten, um die Richtung der Flüssigkeitsströme in den Rinnen zu erzeugen, wobei die längere Seite der Haube senkrecht zur Querstromrichtung der Flüssigkeit ausgerichtet ist, der **dadurch gekennzeichnet ist,**
**dass** jeweils in wenigstens zwei, in Querstromrichtung aufeinanderfolgenden, Rinnen die Leitflächen der Hauben so gerichtet sind, dass die Flüssigkeit in diesen Rinnen in dieselbe Richtung fließt und die Flüssigkeit im übrigen über die Gesamtheit der Rinnen mäanderförmig geführt wird.

2. Hydraulisch abgedichteter Querstrom-Stoffaustauschboden nach Anspruch 1, **dadurch gekennzeichnet, dass** die Rinnen durch zu den Rinnen senkrecht stehende Querkanäle unterbrochen werden.

3. Hydraulisch abgedichteter Querstrom-Stoffaustauschboden nach Anspruch 2, **dadurch gekennzeichnet, dass** die Querkanäle dort Verengungen aufweisen, wo zwei Bodenbereiche mit entgegengesetzter Strömungsrichtung aneinandergrenzen.

4. Hydraulisch abgedichteter Querstrom-Stoffaustauschboden nach Anspruch 3, **dadurch gekennzeichnet, dass** die Verengungen durch stirnseitig zueinander enger angeordnete Gasdurchtrittsöffnungen und/oder Hauben gebildet werden.

5. Hydraulisch abgedichteter Querstrom-Stoffaustauschboden nach einem der Ansprüche 1 bis 4, **dadurch gekennzeichnet, dass** auf der Oberseite wenigstens einiger Hauben Leitbleche befestigt sind, die die Hauben überragen.

6. Hydraulisch abgedichteter Querstrom-Stoffaustauschboden nach Anspruch 5, **dadurch gekennzeichnet, dass** wenigstens auf der Oberseite derjenigen Hauben Leitbleche angebracht sind, die Bodenbereiche entgegengesetzter Strömungsrichtung voneinander trennen.

7. Stoffaustauschboden nach einem der Ansprüche 1 bis 6, **dadurch gekennzeichnet, dass** die Oberseite der Hauben an wenigstens einem Haubenende zum Ende hin eine Abflachung aufweist.

8. Trennkolonnen, die wenigstens einen hydraulisch abgedichteten Querstrom-Stoffaustauschboden gemäß einem der Ansprüche 1 bis 7 enthält.

9. Trennkolonne, die als trennwirksame Einbauten von unten nach oben zunächst Dual-Flow Böden und im Anschluss daran hydraulisch abgedichtete Querstrom-Stoffaustauschböden gemäß einem der Ansprüche 1 bis 7 enthält.

10. Thermisches Trennverfahren, **dadurch gekennzeichnet, dass** es in einer Trennkolonne gemäß Anspruch 8 oder 9 durchgeführt wird.

11. Verfahren der fraktionierenden Kondensation eines Acrylsäure enthaltenden Produktgasgemisches einer heterogen katalysierten Gasphasen-Partialoxidation von C₃-Vorläufern der Acrylsäure mit molekularem Sauerstoff in einer hydraulisch abgedichtete Querstrom-Stoffaustauschböden als trennwirksame Einbauten enthaltenden Trennkolonne, **dadurch gekennzeichnet, dass** als Trennkolonne eine solche gemäß Anspruch 8 oder 9 verwendet wird.

## Claims

1. The hydraulically sealed crossflow mass transfer tray which is suitable as an internal in separating columns for mass transfer between liquid and gas phases, and has separated channels arranged in parallel to one another which conduct the liquid, and gas passages arranged between the channels which are covered by longer hoods whose two lower longitudinal edges dip into the liquid of the channel and have gas exit slots having directing surfaces which direct the gas exit into the liquid in an oblique direction, in order to generate the direction of the liquid streams in the channels, the longer side of the hood being aligned at right angles to the crossflow direction of the liquid, wherein the directing surfaces of the hoods in at least two consecutive channels in the crossflow direction are aligned in such a way that the liquid in these channels flows in the same direction and the liquid is otherwise conducted in a meandering manner over the totality of the channels.

2. The hydraulically sealed crossflow mass transfer tray according to claim 1, wherein the channels are interrupted by cross-channels at right angles to the channels.

3. The hydraulically sealed crossflow mass transfer tray according to claim 2, wherein the cross-channels have narrowings where two tray regions having opposite flow directions border on one another.

4. The hydraulically sealed crossflow mass transfer tray according to claim 3, wherein the narrowings are formed by gas passages and/or hoods which are arranged closer to one another at the end side.

5. The hydraulically sealed crossflow mass transfer tray according to any of claims 1 to 4, wherein directing plates which project over the hoods are secured to the upper side of at least some hoods.

6. The hydraulically sealed crossflow mass transfer tray according to claim 5, wherein directing plates are attached at least to the upper side of those hoods which separate tray regions of opposite flow direction.

7. The mass transfer tray according to any of claims 1 to 6, wherein the upper sides of the hoods have, at at least one end of the hood, a flattening as far as the end.

8. A separating column which comprises at least one The hydraulically sealed crossflow mass transfer tray according to any of claims 1 to 7.

9. A separating column which comprises, as separating internals from bottom to top, firstly dual-flow trays and then The hydraulically sealed crossflow mass transfer trays according to any of claims 1 to 7.

10. A thermal separating process, which is carried out in a separating column according to claims 8 or 9.

11. A process for fractionally condensing an acrylic acid-containing product gas mixture of a heterogeneously catalyzed gas phase partial oxidation of C₃-precursors of acrylic acid with molecular oxygen in a separating column comprising The hydraulically sealed crossflow mass transfer trays as separating internals, which comprises using a separating column according to claim 8 or 9.

## Revendications

1. Plateau d'échange de matière à courant transversal étanchéifié hydrauliquement, qui est approprié en tant que composant dans des colonnes de séparation pour l'échange de matière entre des liquides et des gaz, muni de conduites conduisant le liquide, placées parallèlement, espacées les unes des autres, et d'ouvertures de passage pour le gaz placées entre les conduites, qui sont recouvertes par des calottes plus longues, dont les deux bords longitudinaux inférieurs sont immergés dans le liquide de la conduite et comprennent des fentes de sortie pour le gaz munies de déflecteur, qui conduisent la sortie de gaz dans le liquide dans une direction en biais, afin de générer la direction des courants de liquide dans les conduites, le côté plus long de la calotte étant orienté perpendiculaire à la direction d'écoulement transversal du liquide, qui est **caractérisé en ce que** dans au moins deux conduites successives dans la direction de l'écoulement transversal, les déflecteurs des calottes sont orientés de manière à ce que le liquide s'écoule dans ces conduites dans la même direction et le liquide s'écoule pour le reste sous forme sinueuse sur l'ensemble des conduites.

2. Plateau d'échange de matière à courant transversal étanchéifié hydrauliquement selon la revendication 1, **caractérisé en ce que** les conduites sont interrompues par des canaux transversaux perpendiculaires aux conduites.

3. Plateau d'échange de matière à courant transversal étanchéifié hydrauliquement selon la revendication 2, **caractérisé en ce que** les canaux transversaux présentent des rétrécissements aux emplacements où deux zones du plateau ayant une direction d'écoulement opposée se côtoient.

4. Plateau d'échange de matière à courant transversal étanchéifié hydrauliquement selon la revendication 3, **caractérisé en ce que** les rétrécissements sont formés par des ouvertures de passage du gaz et/ou des calottes agencées frontalement de manière plus étroite l'une par rapport à l'autre.

5. Plateau d'échange de matière à courant transversal étanchéifié hydrauliquement selon l'une quelconque des revendications 1 à 4, **caractérisé en ce que** des déflecteurs, qui dominent les calottes, sont fixés sur le côté supérieur d'au moins quelques calottes.

6. Plateau d'échange de matière à courant transversal étanchéifié hydrauliquement selon la revendication 5, **caractérisé en ce que** des déflecteurs sont placés au moins sur le côté supérieur des calottes qui séparent des zones du plateau de direction d'écoulement opposée.

7. Plateau d'échange de matière selon l'une quelconque des revendications 1 à 6, **caractérisé en ce que** le côté supérieur des calottes présente un aplatissement sur au moins une extrémité de la calotte jusqu'à l'extrémité.

8. Colonnes de séparation, qui contiennent au moins un plateau d'échange de matière à courant transversal étanchéifié hydrauliquement selon l'une quelconque des revendications 1 à 7.

9. Colonne de séparation, qui contient en tant que composants de séparation du bas vers le haut tout d'abord des plateaux Dual-Flow, puis des plateaux d'échange de matière à courant transversal étanchéifiés hydrauliquement selon l'une quelconque des revendications 1 à 7.

10. Procédé de séparation thermique, **caractérisé en ce qu'**il est réalisé dans une colonne de séparation selon la revendication 8 ou 9.

11. Procédé de condensation fractionnée d'un mélange gazeux de produits contenant de l'acide acrylique d'une oxydation partielle en phase gazeuse sous catalyse hétérogène de précurseurs en C₃ de l'acide acrylique avec de l'oxygène moléculaire dans une colonne de séparation contenant en tant que composants de séparation des plateaux d'échange de matière à courant transversal étanchéifiés hydrauliquement, **caractérisé en ce qu'**une colonne de séparation selon la revendication 8 ou 9 est utilisée en tant que colonne de séparation.
